(19) Europäisches Patentamt
European Patent Office
Office européen des brevets

(11) EP 1 269 280 B1

(12) EUROPEAN PATENT SPECIFICATION

(45) Date of publication and mention
of the grant of the patent:
**30.11.2005 Bulletin 2005/48**

(51) Int Cl.⁷: **G05D 7/01**, G05D 16/04

(86) International application number:
**PCT/US2000/022629**

(21) Application number: **00955662.2**

(22) Date of filing: **17.08.2000**

(87) International publication number:
**WO 2001/013017 (22.02.2001 Gazette 2001/08)**

(54) **PRESSURE INDEPENDENT CONTROL VALVE**

DRUCK UNABHANGIGER REGULIERVENTIL

SOUPAPE DE REGULATION NE DEPENDANT PAS DE LA PRESSION

(84) Designated Contracting States:
**AT BE CH CY DE DK ES FI FR GB GR IE IT LI LU MC NL PT SE**

(30) Priority: **17.08.1999 US 149399 P**

(43) Date of publication of application:
**02.01.2003 Bulletin 2003/01**

(73) Proprietor: **Belimo Holding Aktiengesellschaft
8620 Wetzikon (CH)**

(72) Inventor: **Carlson, Bengt A.
Stamford, CT 06906 (US)**

(74) Representative: **Vossius & Partner
Siebertstrasse 4
81675 München (DE)**

(56) References cited:
**US-A- 2 914 083      US-A- 3 770 007
US-A- 4 168 720      US-A- 4 422 470**

## Description

The invention is an automatic pressure control valve which can be used for pressure control of a liquid or gas media flow. It can be used to control the gauge pressure, or the differential pressure between two points in a system.

It can control the pressure in for example; compressed air, water or steam lines, oil and fuel supplies and air handling systems. It can also be used to control the liquid level in tanks.

An important application is together with control valves, for automatic flow rate control. The automatic pressure control valve is piped in series with the control valve and arranged so it maintains a constant differential pressure across the control valve. The two valves works together as a pressure independent control valve.

Automatic pressure control valves are used to control liquid or gas media flow so the pressure is essentially constant. A common type of automatic pressure control valve has the controlled media acting against one side of a diaphragm, and the opposite side is connected to the atmosphere. The differential pressure over the surface over the diaphragm produces a force which is opposed by a spring. Typical examples are shown in US Pat. #4,044,792 and 5,009,245.

Pressure variations causes unbalance between the two forces and produces a net force that moves the diaphragm. The diaphragm operates a valve mechanism, which increases or decreases the pressure of the media until there is balance between the diaphragm and the spring. Thus, the spring tension determines the set-point of the automatic pressure control valve. In the following text the automatic pressure control valve is referred to as APCV.

The diaphragm is connected to the valve mechanism via a stem that passes through a packing or similar. Its friction together with the friction of the valve mechanism must be overcome by the net force from the diaphragm and spring.

In order to get a smooth control, with only a small hysteresis, the diaphragm and spring need to be relatively large so already a very small pressure variation produces a net force strong enough to overcome the friction.

This is not the only reason for using a large diaphragm. The control surface of the valve mechanism has an area against which the media pressure acts and produces a force. This force typically counteracts the spring force. Therefore, variations in the media pressure will change the set-point. This is especially true if the control mechanism must have a large flow capacity. When a large flow capacity is needed, the control surface must be large, and the force counteracting the spring is quite large. Therefore the diaphragm and spring need to be large so the influence of the media pressure on the set-point will not be too large.

Instead of increasing the area of the control surface its movement can be increased. This will also increase the flow capacity. The drawback is that the movement changes the spring tension, which also changes the set-point. The change depends upon how much the control surface needs to open, which is a function based upon both the flow and the pressure.

The change in set-point is reduced by using a long spring, so the movement is small compared to the length of the spring. However, this increases the size and cost of the APCV.

The above described APCV balances the controlled pressure against the atmosphere and a spring. Many other types of valves exists. For example, instead of connecting to the atmosphere, both sides of the diaphragm are connected to the media, but to different points of the system. A built in spring acts against the diaphragm and the valve mechanism regulates the media flow so a controlled differential pressure is maintained between the two points. This is an automatic differential pressure control valve. In the following text referred to as ADPCV.

From the above it is understood that in order to achieve a good accuracy APCVs ADPCV's need large diaphragms and springs. This of course means that also the housing surrounding the diaphragm need to be quite large and costly.

There are some valve mechanisms that have not the above described problems. However, many of these valves (sleeve type, for example) tend to leak, so the very small flows can not be controlled.

It is also possible to use pilot valves to operate the diaphragm to improve the accuracy. However, this an added complication which increases the cost.

The above is a brief summary of the some of the problem associated with APCVs.

Automatic control valves in HVAC and industrial process applications are fitted with actuators that operates the control valves in response to signals from controllers, so the correct flow is provided. The problem is that the flow not only depends upon how much the valves are open, but also upon the differential pressure across the valve.

The differential pressure depends upon the operating conditions of the whole piping system.

A sudden pressure variation in the piping system changes the flow through a control valve and the control is upset. It takes some time before the control system signals the actuator to change the opening of the valve so the correct flow is obtained and stable control is restored.

Control valves are made with a certain flow characteristics, which defines how the flow changes as the valve opens.

The flow characteristics is designed with a curvature that compensates for the non-linear characteristics of the control object (often heat transfer devices). The objective is that the total characteristics is linear, from the signal to the actuator to the output of the control object. This is very beneficial for stable control.

The flow characteristics of a valve is laboratory tested at a constant differential pressure.

Pressure variations due to load changes distorts the flow characteristics of the control valves, which is detrimental for stable control.

It is very difficult to correctly size control valves. The flow coefficient needs to be calculated. It is calculated by multiplying the flow rate (GPM) by the square root of the specific gravity of the liquid and then divide by the square root of the differential pressure at the maximum load conditions. Unfortunately, it is very difficult to obtain a correct information about the differential pressure that reflects the actual conditions. One of the reasons is that the "as built conditions" deviate form the specification.

Without correct information, the control valves will not be sized correctly. Undersized control valves can not supply the needed flow and must be replaced. To avoid this the tendency is to install oversized control valves. However, it is very detrimental for stable control, especially at low loads.

The problem can be solved by combining the control valve with an ADPCV, and arrange it so it maintains a constant differential pressure across the control valve.

With a constant differential pressure across the control valve a well defined flow rate is provided for each degree of opening of the control valve. The flow rate is independent of pressure variations in the piping system before and after the valve combination. Therefore, the combination of an ADPCV and a control valve is referred to as a PRESSURE INDEPENDENT CONTROL VALVE (in the following text called PICV).

Because of the constant differential pressure the control valve will always operate with a perfect valve authority and therefore the flow characteristics will not be distorted by pressure variations in the piping system.

The PICV can be applied in different ways.

It can be used as an automatic flow rate controller, with a manually adjusted set-point, and can have a handle and a graduated indicator disk to adjust the flow rate. Applications are where a constant, or manually adjusted flow rate is needed. It can also be used as a high limit in applications with a variable flow

The PICV can be operated by an actuator, which responds to signals from a controller.

The maximum flow through the PICV can be set by limiting the maximum opening of the control valve. This can be done by limiting the stroke of the actuator.

The PICV can provide significant improvement of the quality of control in an industrial process or in a HVAC control system. The problem so far has been the high cost.

It is primarily the ADPCV that increases the cost. The reason is the relatively large diaphragm, spring and housing. Typical examples of PICV's are shown in US-A-5,143,116 and US-A-5,775,369.

US-A-4,168,720 discloses a poppet valve including a piston having a stem and a disk-shaped head attached to the stem. The piston is mounted to reciprocate in a cylinder, the internal wall of which has a seat formed therein to define a flow orifice between the cylinder seat and the disk-shaped head. The piston head includes a flat face on one side thereof and a working surface on the opposite face which is adapted to define the flow orifice within the cylinder seat. The working surface includes an annular face having a specifically defined shape and a portion connecting the annular face to the stem.

US-A-3,770,007 discloses a control valve which has a variable orifice valve located across a pressure fluid passage. The resulting pressure change is communicated by a channel system to two power chambers which control the movement of a pressure compensating spool also located in the pressure fluid passage thereby regulating fluid flow.

The present invention is a simple APCV, ADPCV and PICV, and is characterized by the features of the claims.

The APCV are referenced to the atmosphere and controls the gauge pressure.

There are two types.

The first type of APCV controls the downstream pressure.

The second type of APCV controls the upstream pressure.

APCV's for general pressure control applications are shown.

Special APCV's for level control in tanks are also shown.

The ADPCV's are the same as the APCV's, the difference is that they are not referenced to the atmosphere. They are instead referenced to a second point in the fluid flow system and controls the differential pressure.

The PICV's are control valves connected in series with ADPCV's and controls the fluid flow rate through the valve independently of variations in the line pressure.

The first type of APCV has a body with a passage way for a fluid flow between an inlet and an outlet. Intersecting the passage way is a seat, against which a control disk operates and regulates the flow. The control disk is on the downstream side of the seat and controls the outlet pressure. On the upstream side of the seat there is a diaphragm from which the control disk is suspended by a stem. The effective surface area of the diaphragm and the control disk are the same, so the two are balanced. Instead of a diaphragm, a piston, disk bellow or any other suitable pressure sensing device can be used.

The incoming pressure acts upon the underside of the diaphragm and the top side of the control disk. The forces are equal and acts in opposite directions so they neutralize each other.

The cross section area of the connecting stem is not important for the balance of forces, because it affects the bottom side of the diaphragm and the top side of the control disk equally.

The only difference is that a stem with a large cross section area results in a smaller opposing forces than a small diameter stem. Either way the opposing forces are equal and neutralize each other.

The pressure differential between the top side of the diaphragm and the bottom side of the control disk, acts over the effective area and produces a force. Under normal conditions, the pressure above the diaphragm is less than the pressure under the control disk. Thereby, the net force is directed upward and strives to move the control disk up against the seat. A spring provides an opposing force and pushes against the top of the diaphragm.

If the outlet pressure for any reason increases, the control disk moves towards the seat and reduces the annular opening between the two. This increases the flow resistance and which reduces the pressure under the control disk. Automatically, the control disk moves and adjusts the annular opening so the outlet pressure assumes a value that produces a balance of forces.

The spring tension determines the set-point for the pressure

(Instead of a spring or in combination with, an air pressure can be used, or weight, or magnet, proportional solenoid, or similar.)

When the top side of the diaphragm is connected (referenced) to the atmosphere the APCV will control a gauge pressure. The spring tension divided by the effective area equals the set-point.

In the following text the "effective area" refer to the side of the pressure sensing member facing the reference pressure, or the side of the disk or cup facing the controlled pressure.

The second type of APCV is similar to the first type, with the following exceptions.

The control disk is on the downstream side of the seat and controls the inlet pressure. On the downstream side of the seat there is a diaphragm to which the control disk is connected by a stem.

The outlet pressure acts upon the underside of the diaphragm and the top side of the control disk. The forces are equal and acts in opposite directions so they neutralize each other.

The pressure differential between the top side of the diaphragm and the bottom side of the control disk, acts over the effective area and produces a force. Under normal conditions, the pressure above the diaphragm is higher than the pressure under the control disk. Thereby, the net force is directed downward and strives to move the control disk down against the seat. A spring under the control disk, opposes the force. (In the case where the pressure above the diaphragm is less than the pressure under the control disk, the spring instead can be located above the diaphragm against which it pushes down.)

The control disk moves down against the seat if the inlet pressure increases. This increases the flow resistance and the pressure under the control disk. It automatically finds the position that produces the inlet pressure that produces a force that balances the pressure above the diaphragm minus (or plus) the spring force.

The spring tension determines the set-point for the pressure. (Instead of a spring or in combination with, an air pressure can be used, or weight, or magnet, proportional solenoid, or similar.)

When the top side of the diaphragm is connected (referenced) to the atmosphere the APCV will control a gauge pressure.

When the top side of the diaphragm is connected to second point in a system, the ADPCV will control a differential pressure between the outlet of the automatic pressure control valve and the second point. The second point should be downstream of the ADPCV.

It is very important that the effective areas of the disk and the diaphragm are essentially the same. Otherwise, the pressure will not be controlled at a stable value.

If the effective areas are different, APCV's controlling the outlet pressure will be affected by the inlet pressure, and APCV's controlling the inlet pressure will be affected by the outlet pressure.

In order to get a well defined effective area of the disk, its perimeter should have a pointed edge which makes contact with the seat at a specific diameter. The pointed edge is also needed to get a high contact pressure against the seat, so a tight close-off can be accomplished. It is also advantageous if the seat is conical so the disk will self-center.

To maintain the same pressure across the surface of the top of the disk, the diameter of the disk should be only slightly larger than the inlet opening of the conical seat. Otherwise the pressure near the perimeter of the disk may drop at higher flow rates. The force balance will be changed and the controlled pressure will drop noticeably at high flow rates.

The PICV's are control valves connected in series with ADPCV's, which are arranged to control the differential pressure across the control valve. Thereby, fluid flow rate through the valve is determined only by the degree of opening of the control valve, and is independent of variations in the line pressure.

The differential pressure is picked up from the second point and can be communicated to the diaphragm of the ADPCV via an external pipe. However, when the ADPCV and control valve are one unit, it is advantageous to use an internal connection.

When a PICV uses the same body for the control valve and the ADPCV, a channel can be made inside the body to communicate the differential pressure of the control valve to the diaphragm of the ADPCV.

If the control valve (of the PICV) is a globe valve, curtain or a top entry ball valve, the main body can be in one piece. The differential pressure is then connected from just after the control valve, and it is relatively easy to make the channel.

If the control valve is a "two piece" ball valve, having a main body and a nipple, the differential pressure should not be connected from the nipple, because it is impractical to line up a channel from the nipple to the main body. Instead, the ball should have a small hole from the bore through the ball, to the cavity surrounding the ball. The cavity is connected via a channel to the diaphragm of the ADPCV. Thus, the pressure inside the ball is communicated to the diaphragm. An added advantage is that when the ball is in the closed position, communication between the diaphragm and the outlet of the PICV is closed. When servicing the APCV only a upstream shut-off valve needs to be closed.

The internal parts (diaphragm with its chamber and spring , shaft, seat and disk) of the APCV or ADPCV can be built as one unit, in the form of an insert. The insert fits into a special recess in the body. This simplifies service and replacement of the APCV.

The present invention is now described in detail in connection with the drawings.

Fig.1 shows a simplified schematic presentation of an APCV using a piston instead of a diaphragm. It is spring biased. The diameter of the piston is essentially the same as the control disk. The control disk is located under the seat. The downstream pressure is controlled.
In all the following figures, the effective area of the diaphragm is essentially the same as the effective area of the control disk.

Fig. 2 shows a simplified schematic presentation of an APCV using a diaphragm. It is spring biased, and the control disk has a chamfered surface operating against the seat. The downstream pressure is controlled.

Fig. 3 is similar to Fig. 2 except the spring is replaced by a regulated air pressure.

Fig. 4 is similar to Fig. 2 except the spring is replaced by a column of a liquid.

Fig. 5 is similar to Fig. 2 except the spring is replaced by a weight.

Fig. 6 is similar to Fig. 2 except the control disk has a pointed edge facing the seat which has a chamfered (conical) surface.

Fig. 7 is similar to Fig. 6 except the control disk has a chamfered surface facing the seat which has a pointed edge.

Fig. 8 is similar to Fig. 7 except the control disk has a rim with a pointed edge facing the surface just under the seat. The surface under the seat may be flat or chamfered. The lower part of the control disk has an optional guide pin, which slides inside a support bushing.

Fig. 9 has the control disk located above the seat. The flow direction is reversed compared to Fig. 1 - 8. The upstream pressure is controlled and over the control disk produces a force that together with the spring is balanced by the force produced by the (higher) pressure above the diaphragm. The lower part of the control disk has an optional guide pin, which slides inside a support bushing. (If the pressure above the diaphragm the low, the spring instead is located above the diaphragm and pushes down.)

Fig. 10 is the same as Fig. 6, but more detailed. A conical spring is used.

Fig. 11 is similar to Fig. 3, but with more detail.

Fig. 12 shows an APCV applied to control the water level in a tank. A magnet is added to provide a positive shut-off.

Fig. 13 is similar to Fig. 12 but connected via a suction line to the tank. A push button is added to temporarily open the valve to purge air from the suction line.

Fig. 14 shows a simplified schematic presentation of a PICV, which comprises a control valve connected in series with an ADPCV. The ADPCV is downstream of the control valve and maintains a constant differential pressure across the control valve.

Fig. 15 is the same as Fig. 14 but more detailed. A ball valve is used as a control valve and the control disk is shaped as a cup, with its open side acting towards the seat.

Fig. 16 shows a simplified schematic presentation of a PICV, which comprises a control valve connected in series with an ADPCV. The ADPCV is upstream of the control valve and maintains a constant differential pressure across the control valve.

Fig. 17 is the same as Fig. 14 but more detailed. A ball valve is used as a control valve and is shown together with an actuator. The different parts of the ADPCV constitute one detachable unit in the form of an insert, which installs in a recess in the main valve body. The valve body has two parts. The main body and a nipple. The differential pressure is communicated to the diaphragm by a channel inside the main body.

Fig. 18 is similar to Fig. 17, except that the ball of the control valve is cantered and a conical spring is used and an air-vent is added.

Fig. 19 shows a detailed example of the ball in Fig. 18.

Fig. 20 shows a detailed example of the insert shown in Fig. Fig. 18.

Fig. 21 shows a detailed example of an insert. This insert uses a cylinder and piston instead of a diaphragm.

Fig. 22 is similar to Fig. 17 and 18, except that the control valve is a "top entry" ball valve. Therefore, the valve body is made as one unit, and the pressure channel connects the diaphragm to the downstream side of the control valve.

Fig. 23 shows an APCV with an Y-shaped body. The APCV mechanism is built as an insert.

Fig. 24 shows a simplified schematic presentation of a PICV. The control valve is a globe valve. The diaphragm of the ADPCV is via a channel connected to the downstream side of the control valve. A spring is located between the plug of the globe valve and the control disk of the ADPCV. The tension of this spring depends upon the position of the plug, and determines the set-point of the ADPCV.

Fig. 25 is similar to Fig. 24, but with greater detail. The ADPCV is in the form of an insert.

Fig. 26 shows a PICV with the APCV of Fig. 23 used as an ADPCV and piped together with a control valve. The diaphragm is via an external pipe connected to the downstream side of the control valve.

Fig. 27 shows a the PICV of Fig. 26 applied to control the flow through a heat transfer device.

Fig. 28 shows the APCV of Fig. 23 used as an ADPCV applied to control the differential pressure between a supply to and return from a group of heat transfer devices.

Fig. 29 is the same as Fig. 26, except that the valve is manually adjusted with a handle.

Fig. 30 shows the APCV applied to control the pressure in air handling systems. A compression spring is used, and its force adds to the weight of the diaphragm and the control disk.

Fig. 31 shows the APCV applied to control the pressure in air handling systems. The control disk is shaped as a cone. An extension spring is used. The spring tension minus the weight of the diaphragm and the control disk determines the set-point of the pressure, which can be adjusted to very low values.

Fig. 32 shows the APCV of Fig. 30 applied as an ADPCV controlling the differential pressure across an air damper which is located downstream. Thereby, the air flow is independent of upstream and downstream pressure variations in the duct work.

Fig. 33 is similar to Fig. 32 except that the air damper is located upstream of the ADPCV. It is of the type that has the control disk above the seat and controls the pressure between the air damper and the control disk.

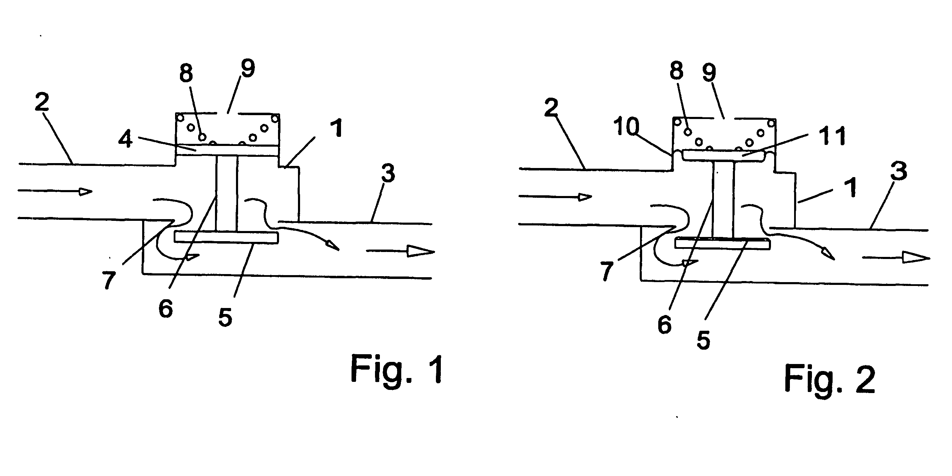

See Fig. 1. It shows the APCV.
The APCV has a body 1 with a passageway for a fluid flow from an inlet 2 to an outlet 3. Intersecting the passageway there is a seat 7. Under the seat 7 there is a control disk 5, which is via a stem 6 is connected to a piston 4. On top of the piston 4 there is a spring 8 which pushes down. The spring and piston is enclosed in a cylinder with an opening 9 to the atmosphere.

The diameters of the piston 4 , seat 7 and control disk 5 are identical. Therefore, the inlet 2 pressure P1 acts upon the underside of the piston with the same force as it acts upon the top side of the control disk 5. The two forces neutralize each other.

Downstream of the outlet 3 there are devices (not shown) connected that produces some resistance to the fluid flow.

The spring 8 pushes the piston, stem and control disk assembly down and opens the seat so the fluid can pass from the inlet 2 to the outlet 3 . The outlet pressure (P2) increases and acts upon the underside of the control disk 5. The pressure (P2) increases until it upon the area of the underside of the control disk 5 produces an upward force strong enough to begin to compress the spring 8. The control disk 5 moves up closer to the seat 7 which increases the flow resistance. This reduces the outlet pressure until it produces over the control disk 5 an upward force that balances the spring force 8. Thus, the outlet pressure (P2) is determined by the spring force divided by the area of the control disk.

The control disk and piston can be made with very close tolerances, so the areas of the piston, seat and control disk can be made practically identical. This makes it possible to make the APCV independent of quite large variations of the inlet pressure (P1).

Unfortunately, a small clearance is needed between the piston and cylinder, which will cause a leakage. Therefore, the flow can be controlled down to a certain minimum flow only. Also there is a risk that dirt particles may accumulate in the clearance and cause friction. Therefore, in many cases it can be better to use a diaphragm. The choice, piston or diaphragm depends upon the requirements for each application. Foe simplicity, in the following description the diaphragm alternative is shown only.

Fig. 2 shows an APCV with a diaphragm 10 instead of piston. This eliminates leakage and reduces the sensitivity for dirt. The diaphragm 10 has a support 11, which is connected to the stem 6.

The control disk 5 has a chamfered surface facing the underside of the seat 7 . The purpose of the chamfered surface is to guide the control disk 5 so it finds its correct position in the center of the seat 7.

The diaphragm 10 has one convolute around the perimeter. The average of the outside and inside diameters of the convolute determines approximately the (hydraulic) effective area of the diaphragm 10.

When the valve is dosed, the bottom edge of the seat 7 touches the chamfered surface of the control disk 5 along a very thin contact line. This ensures a relatively high contact pressure and a tight shut-off. (It can be advantageous if either the seat or the chamfered surface is made of a semi-resilient material.)

When closed, the effective area of the control disk 5 is determined by the diameter of the contact line. The control disk 5 should be sized so its effective area is close to the effective area of the diaphragm. The smaller the difference is the less the outlet pressure (P2) is affected by variations in the inlet pressure P1. The outside diameter of the control disk 5 should be only slightly larger than the diameter of the contact line. Otherwise, the outlet pressure (P2) will change at high flow rates.

In the following description diaphragms are discussed. However, it is also applicable to pistons, disks, bellows and other pressure sensitive members. The surface of control disk or cup and the pressure sensitive member can have any useful shape. For example, circular, oblong, triangular, rectangular, quadratic, rectangular and polygon.

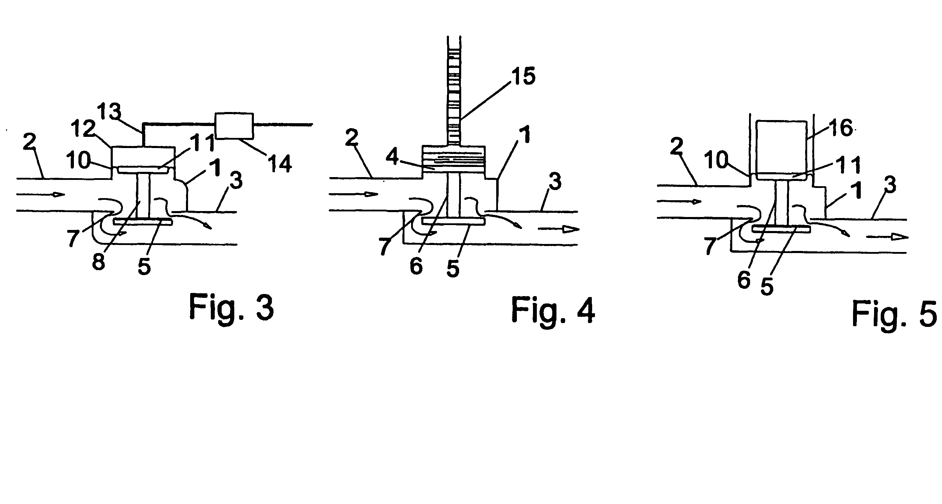

See Fig. 3. It is similar to fig. 2 except that the spring is replaced by a regulated air pressure.

A regulated pressure supply 14 has a connection 13 to the diaphragm chamber 12.

The APCV balances the air pressure (P3) in the diaphragm chamber 12 by an essentially equal outlet pressure (P2).

See Fig. 4. It is similar to fig. 2 except that the spring is replaced by a column 15 of liquid which excerpts a pressure upon the diaphragm 10.

The APCV balances the liquid pressure (P3) in the diaphragm chamber 12 by an essentially equal outlet pressure (P2).

See Fig. 5. It is similar to fig. 2 except that the spring is replaced by a weight 16 which excerpts a force upon the diaphragm 10.

The APCV balances the weight by a corresponding outlet pressure (P2).

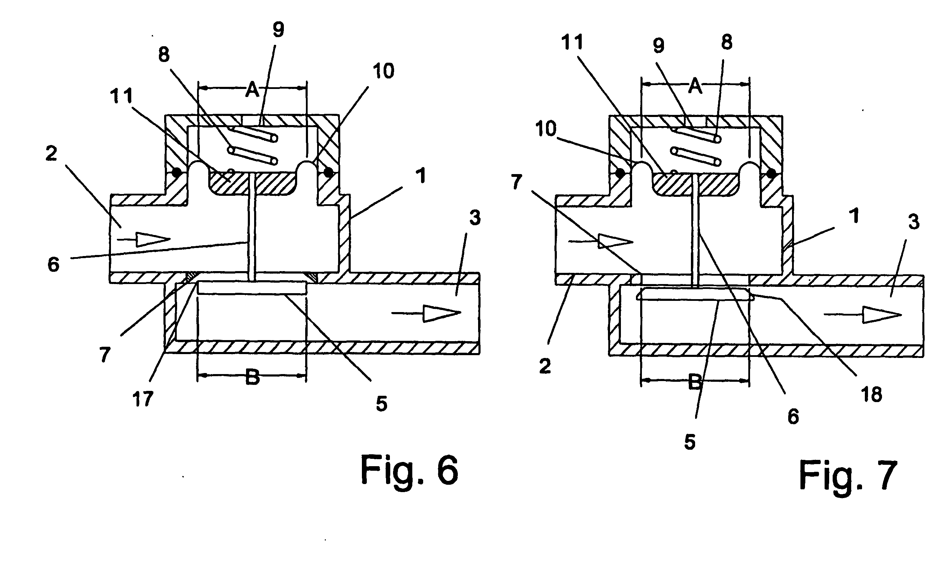

Fig. 6 is similar to Fig. 2 except that the seat 7 has a chamfered surface facing down against the control disk 5 which has an upper edge 17 which can contact the chamfered surface of the seat 7.

When the valve is closed, the top edge of the control disk 5 touches the chamfered surface of the seat 7 along a very thin contact line

The inner diameter of the seat 7 should be only slightly smaller than the diameter of the control disk 5 . Otherwise, the outlet pressure (P2) will change at very high flow rates.

Fig. 7 is identical to fig. 2 but with greater detail. It is clearly shown that the seat 7 has a pointed edge facing the control disk 5.

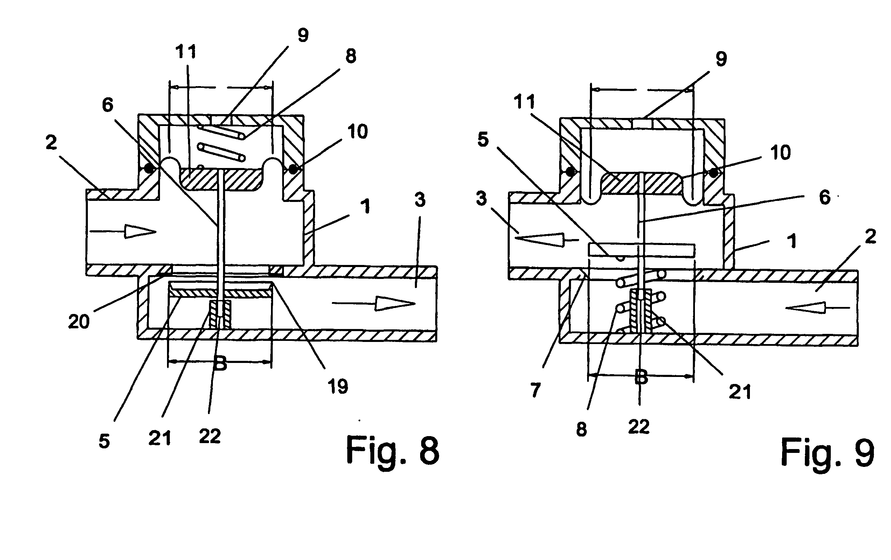

Fig. 8 is similar to fig . 7, except nether the seat 7 or the control disk 5 has a chamfered surface. Instead, the control disk 5 has a slightly larger diameter than the seat 7 . At the top side perimeter of the control disk 5 there is a ridge 19 with a pointed edge facing up against the bottom of the seat 7, which as a flat surface 20 (of a semi-resilient material, optional).

The control disk 5 is guided by a pin 21 which slides inside a guide bushing 22.

As an alternative (not shown), the bottom side perimeter of the seat 7 has a ridge 19 , with a pointed edge facing down against the top of the control disk 5 , which as a flat surface 20 (of a semi-resilient material, optional).

In fig. 1 - 8 the diaphragm 10, stem 6 and control disk 5 assembly is free floating and makes no contact (except a slight contact with the guide bushing 22 in fig. 8) with any stationary part until it eventually makes contact with the seat 7 . Therefore, these APCV operate with no (or negligible) friction, and therefore can operate accurately with a relatively small diaphragm and spring.

The outlet pressure will increase, if there is any leakage between the control disk and the seat, when the downstream line is shut-off. This increases the force acting upon the control disk until it is completely closed against the seat, and the leakage is eliminated.

The following applies to Fig. 1 - 8.

Calculation of the set-point of the pressure control of the outgoing pressure P2.

Incoming pressure = P1

Outgoing pressure = P2

Pressure in the diaphragm chamber = P3

Spring tension = S

Effective area of diaphragm = A

Effective area of control disk = B

A=B

$$P2 = (P3 \times A + S)/A = P3 + S/A$$

Calculation of the Influence of the incoming pressure P1 on the outgoing pressure P2, at different effective areas. P3 atmospheric pressure.

This following applies to Fig. 1 - 8.

Effective diaphragm area = A    Effective disk area = B.    Spring tension = S.

(The weight of the diaphragm, shaft, spring and control disk are included in the spring tension. The weight either adds to or subtracts from the spring tension. However, in most applications the weight is inconsequential .)

$$P2 = (S - P1(B - A))/A$$

Example 1; A=10sq.in B=10sq.in S=100lb
When P1=10psig P2 = ((100 - 10(10 - 10))/10 = 10psig
When P1=100psig P2 = ((100 - 100(10 - 10))/10 = 10psig
There is no change in P2 when P1 is increased from 10 to 100psig.

Example 2; A=9sq.in B=10sq.in S=100lb
When P1=10psig P2 = ((100 - 10(10 - 9))/9 = 10psig
When P1=100psig P2 = ((100 - 100(10 - 9))/9 = 0psig

P2 changes from 10 psig to 0 psig when P1 increases from 10psi to 100psig.
It is obvious that it is important that the effective areas of the diaphragm and the disk are the same. Otherwise the accuracy is compromised.

See Fig. 9. It is a back pressure APCV and controls the inlet pressure (P1). The control disk 5 is located above the seat 7. The flow direction is reversed compared to Fig. 1 - 8. The (upstream) inlet pressure (P1) acts upon the control disk 5 and together with the spring produces an upward force, which is balanced by the force produced by the (higher) pressure (P3) above the diaphragm 10. If instead, the pressure above the diaphragm is lower than the inlet pressure, the spring then is located above the diaphragm and pushes down. The lower part of the control disk 5 has an optional guide pin 22, which slides inside a guide bushing 21.

Calculation of the incoming pressure P1 in Fig. 9.
Incoming pressure = P1
Outgoing pressure = P2
Pressure in the diaphragm chamber = P3
Spring tension = S
Effective area of diaphragm = A
Effective area of control disk = B
A=B

$$P1 = (P3 \times A - S)A = P3 - S/A$$

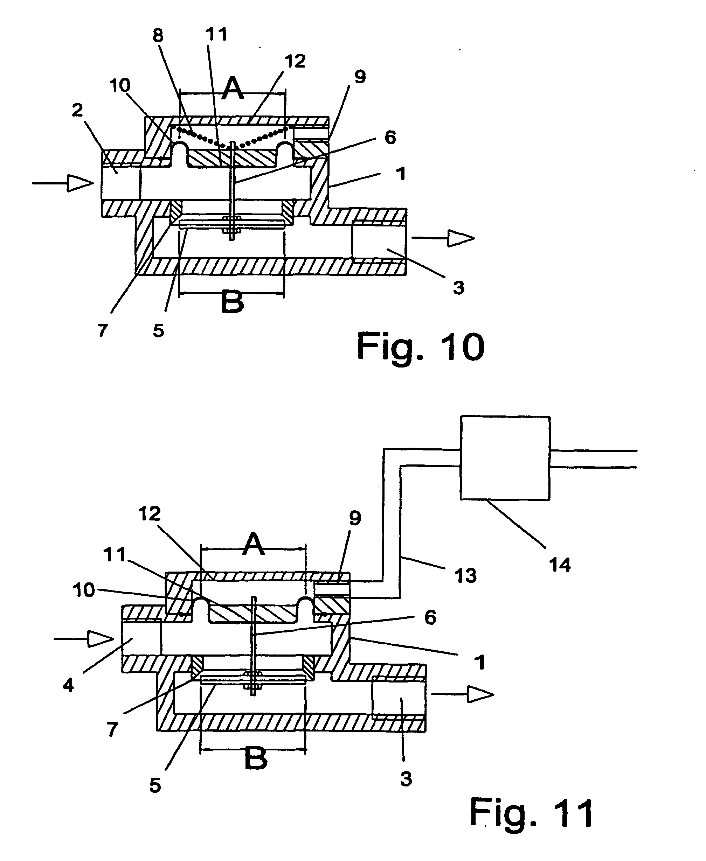

Fig. 10 is similar to fig. 6, but with greater detail. In order to pass a larger flow rate the control disk 5 need to move away from the seat 7. This expands the spring 8 and the spring force drops. A lower spring force means that the outlet pressure (P2) drops. In order to reduce the variation, a spring with a relatively small spring rate should be used, because its force drops less for a given expansion. In order to produce the required spring force, a long cylindrical spring is needed. Alternatively, a conical spring 8 that has been made with a linear characteristics can be used. It require little space because it can be made quite long and then compressed so it is almost flat and still provide a small spring rate.

Fig. 11 is similar to fig. 3, but with greater detail. The diaphragm 10 is biased by a regulated pressure source 14. The outlet pressure (P2) will assume the essentially same value as the pressure (P3) in the diaphragm chamber 12.

Biasing by a regulated pressure gives the advantage of providing the same force from the diaphragm regardless of the movement of the control disk 5. Therefore, the outlet pressure is not affected by how much the control disk 5 need to open.

In order to achieve a good control where the outlet pressure (P2) is unaffected by the inlet pressure (P1), the control disk 5 must make contact with the seat 7 along a thin and well defined contact line. Otherwise, the effective area will change as the control disk 5 moves.

For example, if both the seat 7 and control disk 5 have same angle conical surfaces (as a valve and seat in a car engine), then the contact line will be quite wide. The contact pressure will be low and the valve will not provide a tight shut-off until the outlet pressure has increased significantly above the set-point.

The contact line is the surface of a frustum of a cone, which has a small and a large diameter. When the valve is closed the effective area of the control disk 5 is determined by the smaller diameter. As the control disk 5 moves away from the seat 7 the effective area is based upon a diameter with a value that varies somewhere in between the small and large diameters. The result is a poor control of the pressure.

The geometrical shapes of seats and control disks shown in the different figures represents only some examples of the geometrical shapes that can be used.
For example it is possible to use two conical surfaces as long as their angles are different at the point of contact.
In order to achieve a good accuracy, it is important that the two surfaces make contact along a well defined thin line.

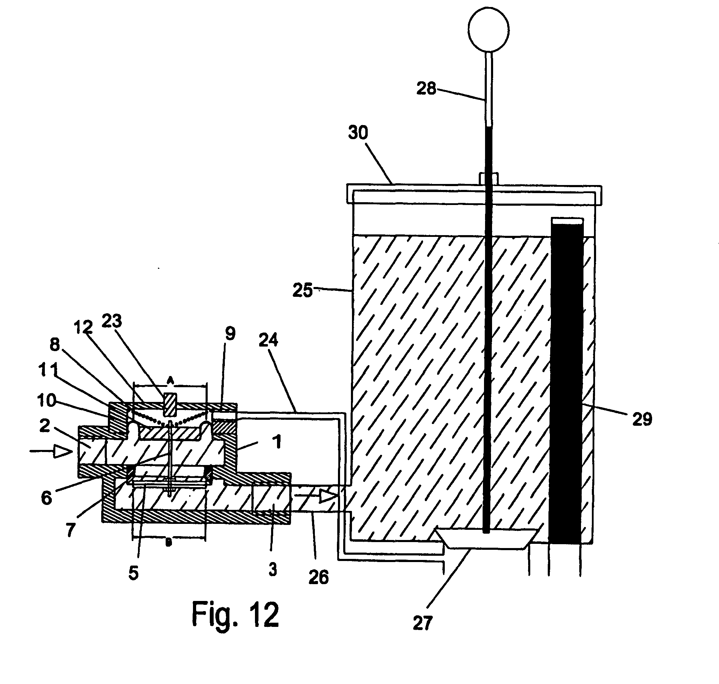

See Fig. 12. It shows an APCV used for control of the liquid level in a tank. For example a toilet tank 25.

The APCV is connected 26 near the bottom of the tank 25 , which has a lid 30 . A rod 28 runs through the lid to a valve 27 at the bottom of the tank.

The spring 8 provides the force to balance the liquid pressure under the control disk 5' to a pressure that corresponds to a predetermined level.

The tank is emptied by momentarily opening the valve 27. The pressure under the control disk 5 drops and it opens. The tank is filled by the APCV. The control disk closes, when the pressure corresponds to the predetermined level.

By adding an optional magnet 23 to the APCV, the control action is more positive. The APCV will operate with a hysteresis and a tight shut-off is accomplished.

The tank 25 has an overfill pipe 29 in the event the APCV should fail.

The diaphragm chamber 12 is connected by a small pipe 24 to the bottom of the valve 27. Thereby any leakage from the diaphragm 10 is drained.

The APCV can control the liquid level in a closed tank by connecting the small pipe to the top of the tank.

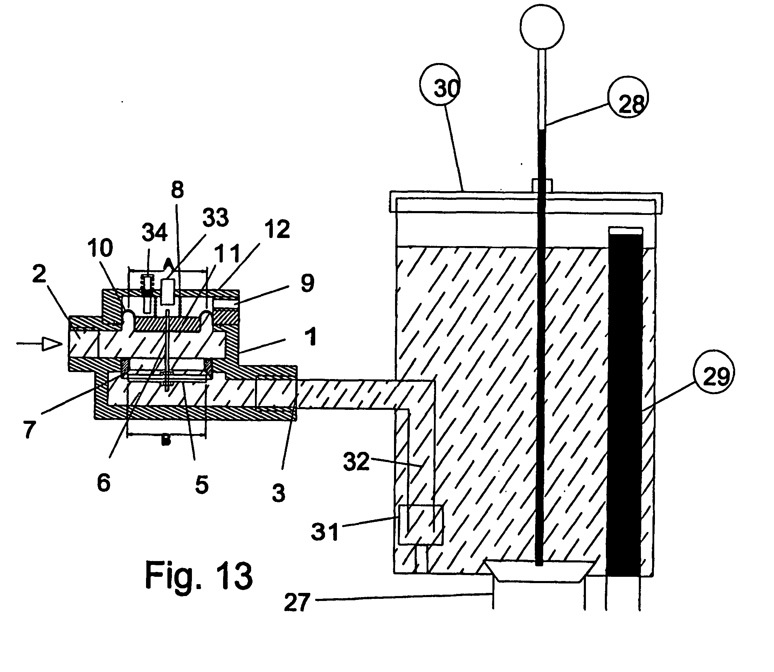

Fig. 13 shows the APCV located at a level slightly below the desired liquid level. From the outlet 3 a suction pipe 32 is running to the bottom of the tank 25. The spring 8 is small compared to the spring in fig. 12 (or eliminated).

When the tank 25 is emptied, the pressure in the suction pipe 32 drops below the atmospheric pressure. The control disk 5 opens.

When the tank is filled, the pressure in the suction pipe 32 rises and when the level comes close to the desired level the spring begins to compress, whereupon the magnet force increases and the APCV closes.

The magnet 33 makes the control action positive. The magnet introduces a hysteresis. When the liquid level begins to drop, the magnet 33 holds the control disk 5 closed by the attracting force upon the stem 6. Eventually the level has dropped so much that the magnetic force is overcome and the control disk opens. When the level rises, the spring 8 holds the control disk open until the level high enough to begin to move the control disk, diaphragm and stem up. Then the magnetic attraction pulls the stem up and the valve closes and gives a positive shut-off.

The magnet 33 is optional, but without it the shut-off is gradual instead of positive.

The system will not work unless the suction pipe 32 is filled with liquid. By pressing down a spring loaded push button 34 , the valve is momentarily opened and the suction pipe is purged from air.

A cup 31 at the end of the suction pipe 32 prevents air from entering the suction pipe when the liquid level is low.

In Fig. 12 and 13, the supply water pressure should be relatively constant, otherwise inlet pressure variations may affect the level. If needed, an extra pressure regulator should be used.

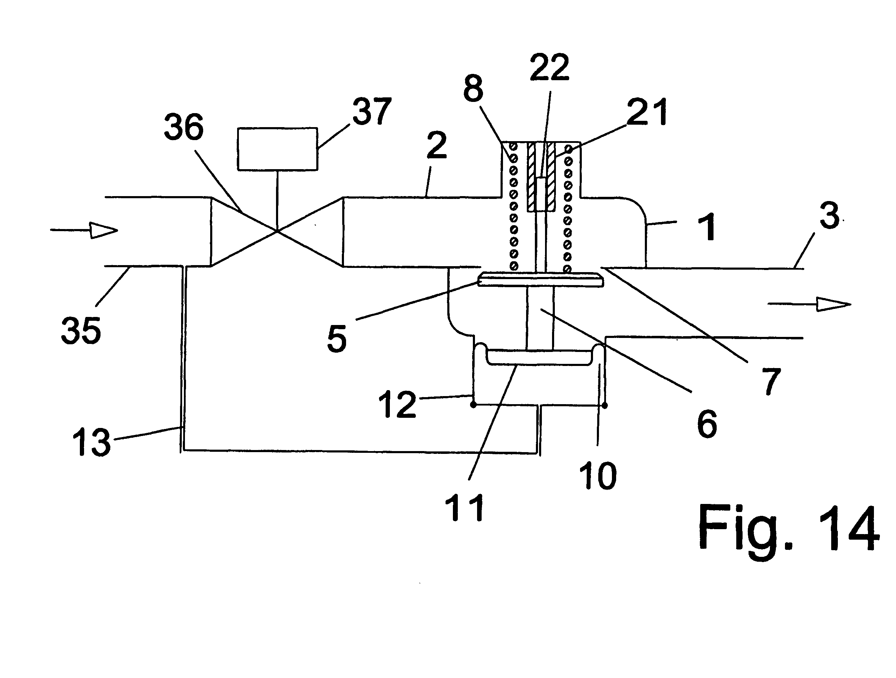

Fig. 14 shows a simplified schematic presentation of a PICV, which consists of a control valve and an ADPCV.

The fluid flow enters from the left through connection 35 and passes first through a control valve 36 and then an ADPCV before exiting the outlet 3.

The ADPCV is of the same type that is shown in Fig. 9, but it is not referenced to the atmosphere, instead the connection 9, is connected by a pipe 13 to a point just upstream of the control valve 36. Therefore, it is not an APCV but an ADPCV. NOTE! It is located downstream of the control valve 36.

This ADPCV controls its inlet 2, pressure (P1) to value which is equal to the pressure (P3) just upstream of the control valve 36, minus the spring force (S) divided by the effective area of the diaphragm (A).

The differential pressure across the control valve 36 is the difference between the pressures P3 and P1, and is maintained at a constant value by the ADPCV.

With a constant differential pressure across the control valve 36 each degree of opening correspond to a specific flow rate, regardless of pressure variations between the inlet of the control valve 35 and the outlet 3 of the ADPCV.

The control valve '36' has an actuator 37 which may be manually operated or, automatic and responds to control signals.

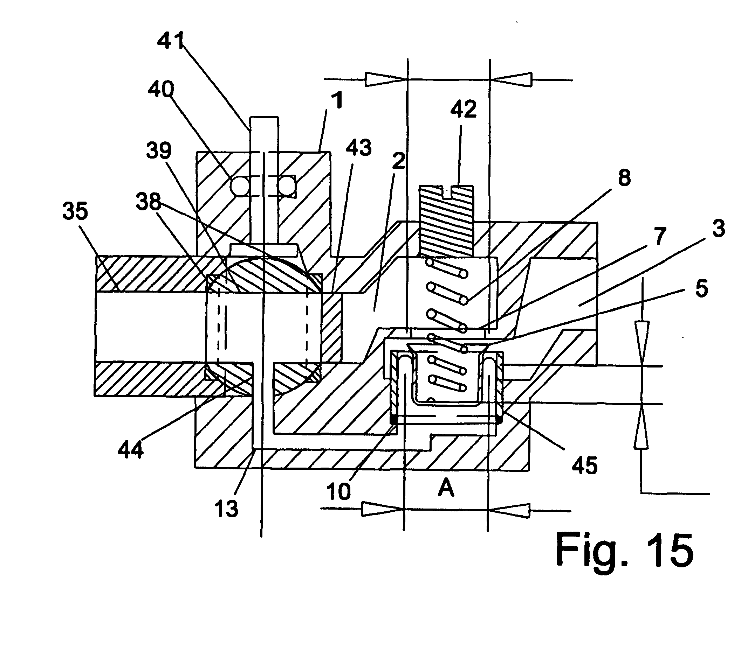

Fig. 15 is similar to fig. 14, but more detailed. The control valve and ADPCV are built together in one body 1.

The control valve is a ball valve. It has a ball 39 suspended between two seats 38. It is operated 0 - 90 degrees by a shaft 41, which is sealed by an O-ring 40. An optional characterizing disk 43 (see for example US pat. # 6,039,304) determines the flow characteristics.

The control disk 5 is shaped as a cup with its opening facing up against the bottom of the seat 7. The opening has a pointed edge and is flared out, so it has an area that is the same as the effective area of the diaphragm.

A diaphragm 10 rests against the control disk 5 and a cylinder 45.

A spring 8 presses against the bottom of the control disk 5.

The diaphragm is of a rolling type with a convolute. The distance between the convolute and the seat is shorter than the distance between the bottom of the control disk and the seat, by the distance "C". This tends to stabilize the control disk 5 so it points up against the seat 7.

The ball 39 has a small hole 44 facing down to a connection channel 13 which leads to the diaphragm 10. Thus the pressure (P3) inside the ball 39, which also is the pressure in front of the characterizing disk 43, is communicated to the diaphragm 10.

The inlet 2 pressure (P1) is controlled to a value which is equal to the pressure (P3) just in front of the characterizing disk 43 minus the spring force (S) divided by the effective area of the diaphragm (A).

The differential pressure across the characterizing disk 43 is the difference between the pressures P3 and P1, and is maintained at a constant value by the ADPCV.

A specific flow rate is provided for each degree of opening of the ball 39 regardless of pressure variations between the inlet 35 of the control valve, and the outlet 3 of the ADPCV (as long as the inlet pressure is above a certain minimum value, which depends upon the spring tension).

The small hole 44 in the ball 39 eliminates the need to connect the communication channel 13 to a point upstream of the ball 39. Thereby, a connection through the nipple at the inlet 35 is avoided. The nipple is screwed into the body 1 and it would be very difficult to exactly line up a channel in the nipple with the channel 13, in the body 1.

The spring 8 tension can be adjusted by a screw 42. This adjusts the differential pressure set-point of the ADPCV. A higher set-point increases the flow rate.

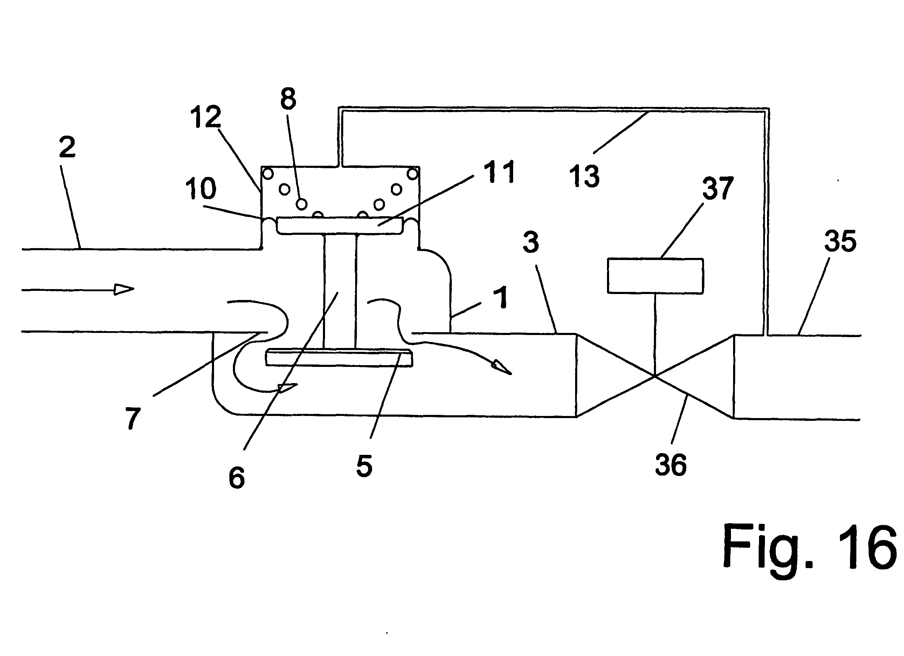

Fig. 16 shows a simplified schematic presentation of a PICV, which comprises a control valve connected in series with an ADPCV. The ADPCV is upstream of the control valve and maintains a constant differential pressure across the control valve 36.

The fluid flow enters from the left through connection 2 and passes first through the ADPCV and then the control valve 36 before exiting the outlet 35.

The ADPCV is of the same type that is shown in fig. 7, but it is not referenced to the atmosphere, instead the connection 9 is connected by a pipe 13 to a point just downstream of the control valve 36. Therefore, it is not an APCV but an ADPCV. NOTE! The ADPCV is located upstream of the control valve 36.

This ADPCV controls its outlet pressure (P2) to value which is equal to the pressure (P3) just downstream of the control valve 36, plus the spring force (S) divided by the effective area of the diaphragm (A).

The differential pressure across the control valve 36 is the difference between the pressures P1 and P3, and is maintained at a constant value by the ADPCV.

With a constant differential pressure across the control valve 36 each degree of opening correspond to a specific flow rate, regardless of pressure variations between the inlet 2 of the ADPCV and the outlet 35 of the control valve 36.

The control valve 36 has an actuator 37 which may be manually operated or, automatic and responds to control signals.

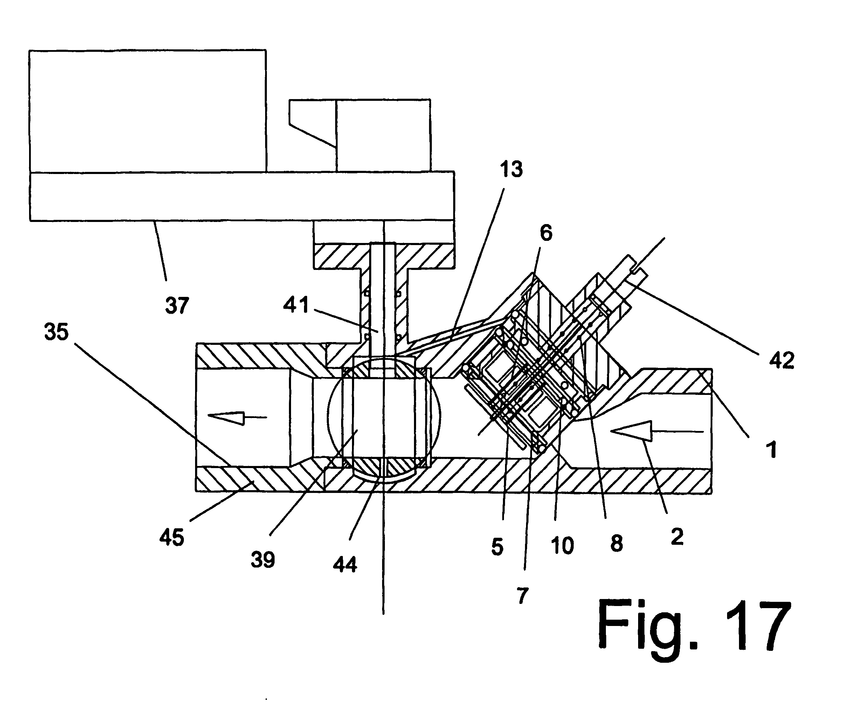

Fig. 17 is the same as fig. 16, but with greater detail. The ADPCV is built as one unit which is inserted into a recess in the body 1. Thus the ADPCV can be completed separate from the body 1. The ADPCV assembly is detachable and can easily be replaced or removed for service or cleaning.

The ball 39 has a small hole 44 which connects the bore through the ball with the cavity between the ball and the body. A channel connects the cavity with the diaphragm 10.

A characterizing disk can be used. If it is eliminated the ball should be sized so it provides a suitable flow resistance. For example, 2 psi pressure drop at 6GPM, for a ½" PICV, which correspond to a flow capacity CV=4.24. The spring 8 is adjusted so the ADPCV operates at 2 psi.

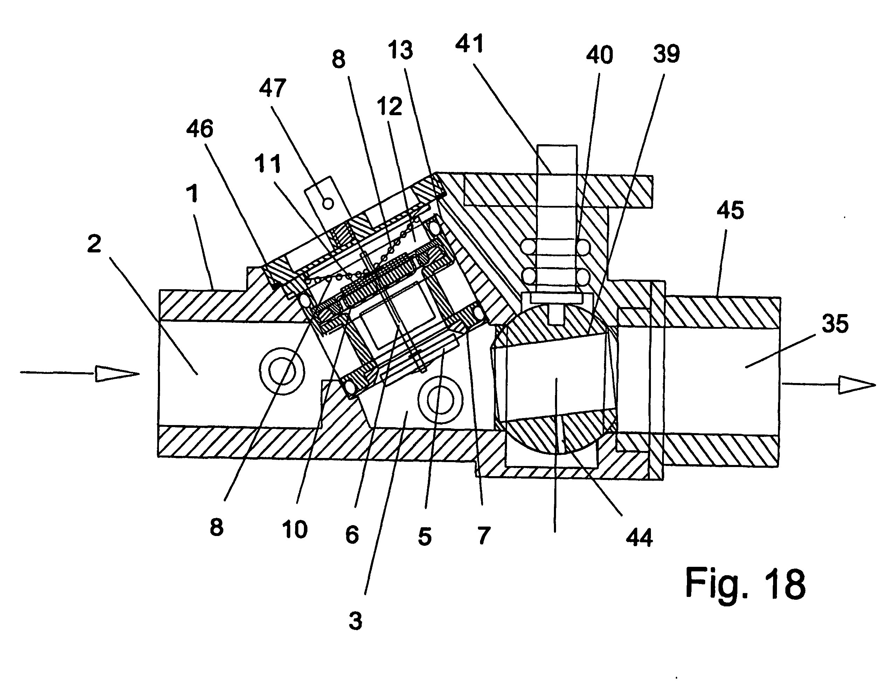

Fig. 18 is similar to fig. 17, but with a few modifications.

To save space a conical spring 8; is used. The plug 46 that seals the opening for the ADPCV assembly has an air-vent 47. It removes trapped air from the diaphragm area.

The flow capacity of the ball is reduced, without using any characterizing disk. This is done by installing the ball 39, with a slanted position, so the ball always is operated with its fluid flow passageway at an angle different from perpendicular to the axis of rotation of the ball.

The shaft 41 which tums the ball 39 has a blade that fits a grove in the ball. To operate the ball at a slanted position, the grove should have at an angle that is offset from perpendicular to the bore through the ball.

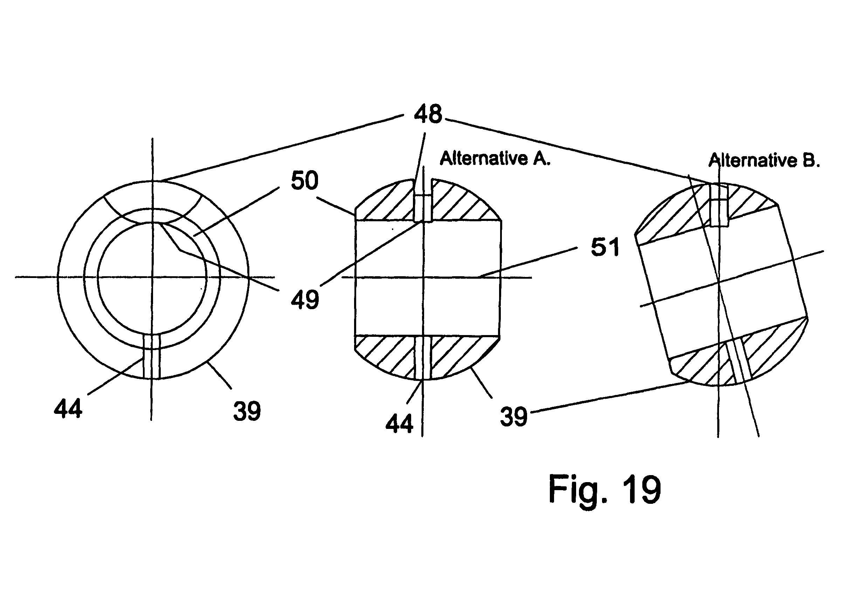

Fig. 19 shows the ball 39 in greater detail. One side 50 of the ball 39 is flattened. Thereby, this side of the ball will still be open when the opposite side just begins to close against the seat. In fig. 18 it is the downstream side of the ball that is flattened. This ensures that the upstream side of the ball is the first to close. The ball needs to be flattened only slightly.

Instead of flatten the side, the bore through the ball can be slightly wider at one side. Alternatively, there can be a notch in the side of the downstream opening.

At the bottom side of the ball 39 a hole 44 is drilled. It provides communication between the inside of the ball and the cavity surrounding it. The cavity is by a channel connected to the diaphragm 10.

The grove 48 mates with a blade at the end of the shaft 41. The hole 44 can be eliminated if the grove 48 breaks through into the bore of the ball 39.

"Alternative A" shows the grove 48 at the standard perpendicular position.

"Alternative B" shows the grove 48 an offset position, which will give the ball 39 a slanted orientation.

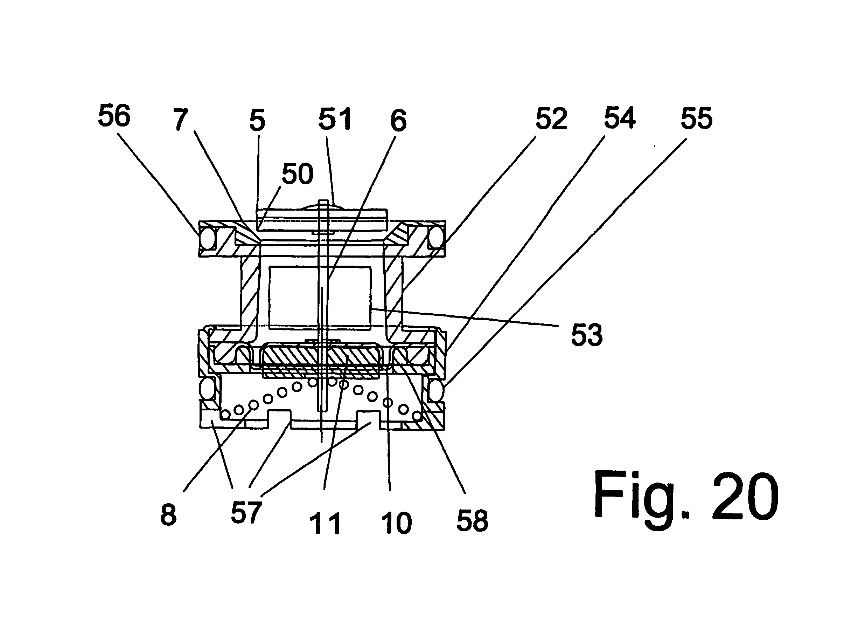

Fig. 20 shows an APCV or ADPCV assembly. The diaphragm 10 is of a rolling type and rests against a support 11 The outside rests against a ring 58 with a cylindrical inside surface. The ring has an annular recess for the bead around perimeter of the diaphragm 10.

The ring 58 and diaphragm is fastened to one end of a tubular body 52 by a ring shaped body 54 The ring shaped body 54 also holds the spring 8. The top has side openings 57 so the pressure of the control valve can reach the diaphragm.

The opposite end of the tubular body 52 has a seat 7 against which the control disk 5 operates. The tubular body 52 has openings 53 for the fluid flow in the sides.

Between the control disk and the seat a disk 50 of semi-resilient material may be disposed.

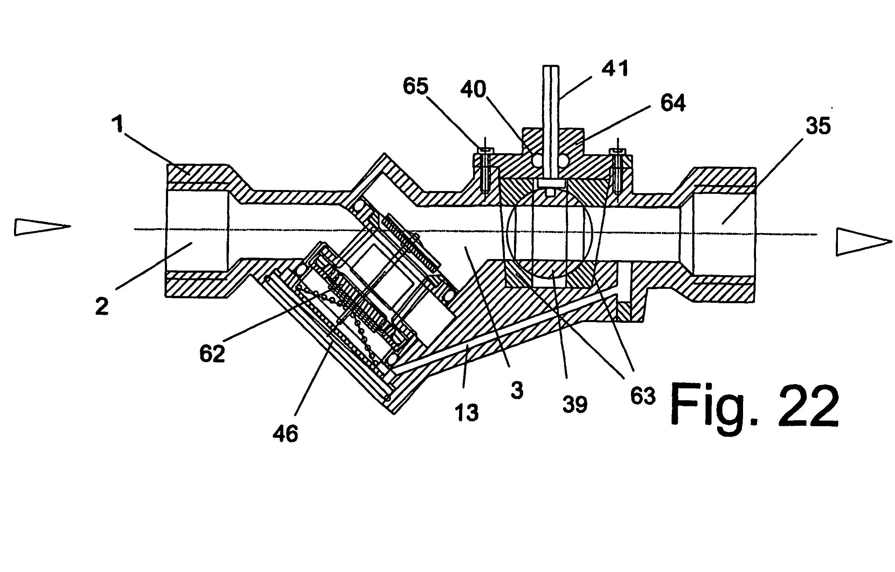

The stem 6 is attached to the control disk 5 via a wave spring 51. This reduces the force by which the control disk can press against the seat, because the movement of the stem 6 is limited by a stop (shown as plug 46 in fig. 22).

O-rings 52 and 59 seals the assembly against the recess of the body.

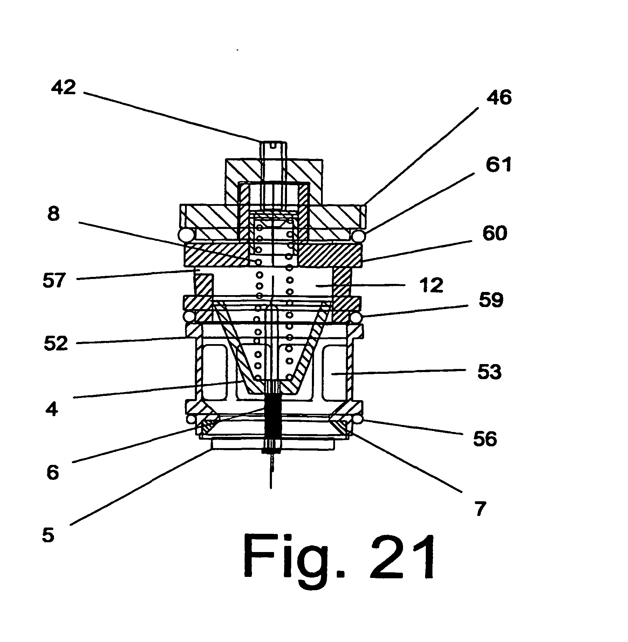

Fig. 21 shows an APCV or ADPCV assembly using a piston 4 instead of a diaphragm.

Fig. 22 is similar to Fig. 17 and 18, except that the control valve is a "top entry" ball valve. Therefore, the valve body is made as one unit, without any nipple. The pressure channel 13 connects the diaphragm 10 to the downstream side of the control valve.

The recess for the ADPCV assembly 62 is covered by a plug, which can be secured by a retaining ring. The conical recess for the top entry ball 39 and seats 63 is covered by a lid 63, which is fastened by screws 65.

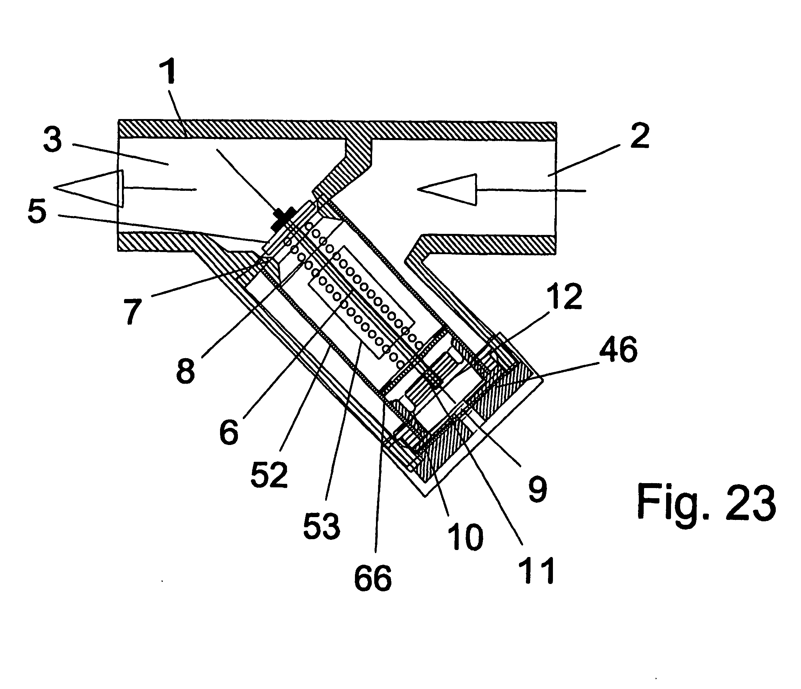

Fig. 23 shows an APCV or ADPCV assembly in an Y-shaped body.
The assembly is built as an insert, which is adapted for use in an Y-shaped body.

Because of the available space, a cylindrical spring 8 can be used. It presses against the control disk 5 and a support 66.

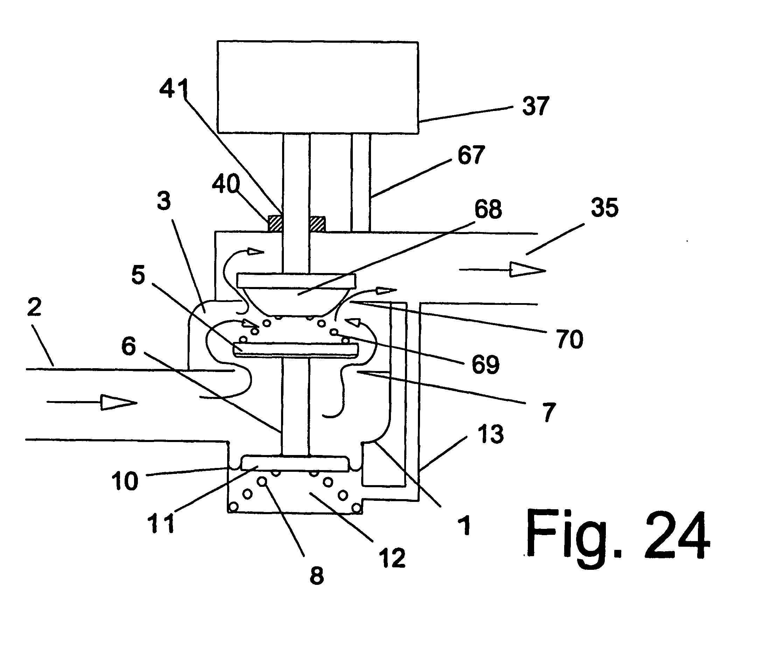

Fig. 24 shows a simplified schematic presentation of a PICV. The control valve is a globe valve. The ADPCV is located upstream of the control valve and controls the differential pressure across the control valve.

The diaphragm 10 of the ADPCV is via a channel 13 connected to the downstream side of the control valve 68. A spring 69 is located between the plug 68 of the globe valve and the control disk 5 of the ADPCV. The tension of this spring 69 depends upon the position of the plug 68, and determines the set-point of the ADPCV. When the plug 68 moves down towards the seat 70 and reduces the opening, the spring 69 is compressed. Its force opposes the main spring 8 and the ADPCV will operate with a lower differential pressure across the control valve.

The variable differential pressure modifies the valve characteristics of the globe valve. The rangeability is also improved because the pressure is reduced as the valve closes.

The plug 68 can have a contoured body to provide a specific characteristics , for example; linear or equal percent. Alternatively, the plug 68 can be a flat disk which gives an inherent "quick opening" characteristics. However, the inherent characteristics is modified by the variable differential pressure caused by the spring 69.

The spring 69 can have a linear characteristics, or a non-linear characteristics (for example; exponential) in order to produce a specific characteristics.

The differential pressure can rise to very high values across a conventional control valve, and a quite high force is required to operate the valve.

An additional advantage with this type of PICV is that a in many cases a smaller and less costly actuator is needed, compared to a standard control valve. The reason is that the differential pressure across the control valve is controlled to a lower value than the total differential pressure across the PICV. Therefore, the force needed to operate the plug 68 in the PICV is quite low compared to a similar plug in a conventional control valve.

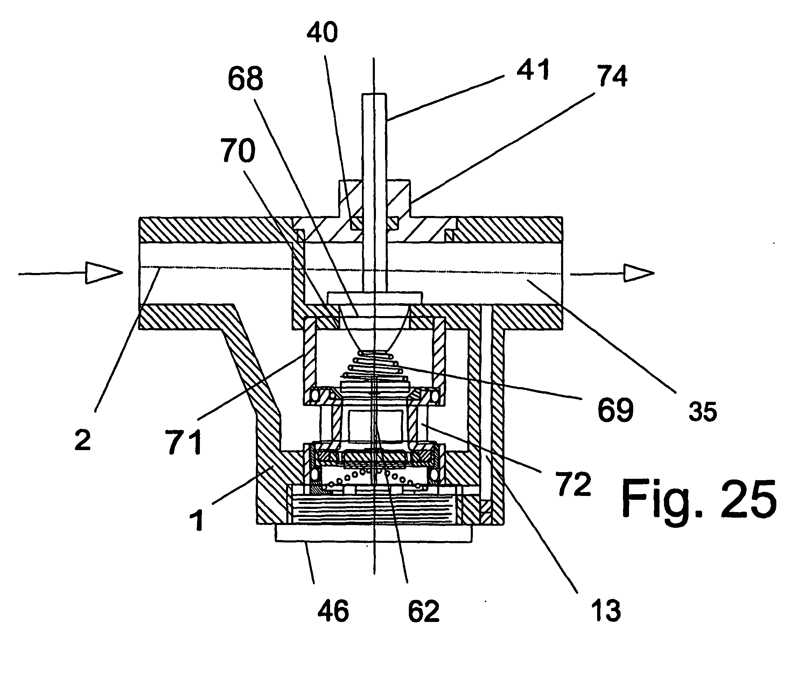

Fig. 25 is similar to Fig. 24, but with greater detail. The ADPCV 62 is built in the form of an insert that fits in a recess under the seat 70 of the globe valve.

In the recess a tubular body 71 is fitted. It has flow openings 72 in the side.

The recess in the body 1 is covered by a plug 46.

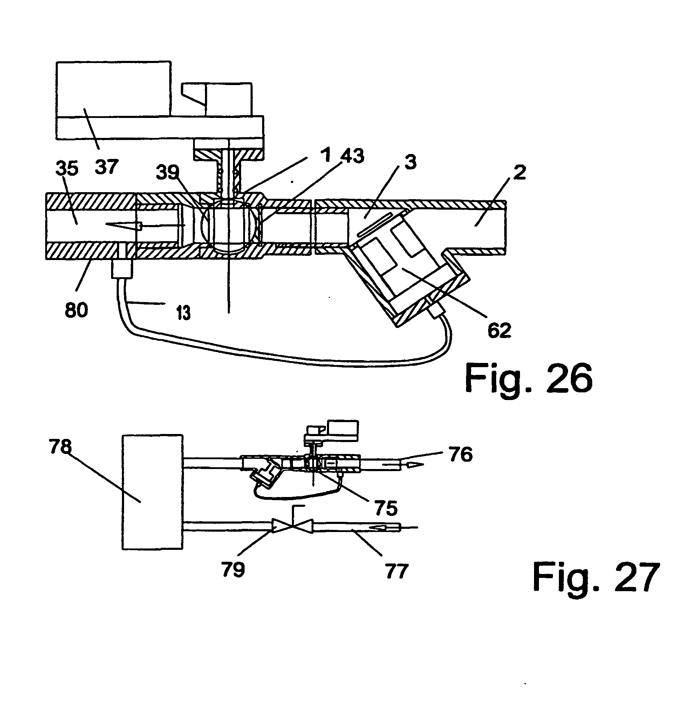

Fig. 26 shows a PICV with the APCV of Fig. 23 used as an ADPCV and piped together with a control valve. The diaphragm in the ADPCV is via an external pipe 13 connected to the downstream side of the control valve.

Fig. 27 shows a the PICV 75 of Fig. 26 applied to control the flow of chilled or hot water through a heat transfer device 78.

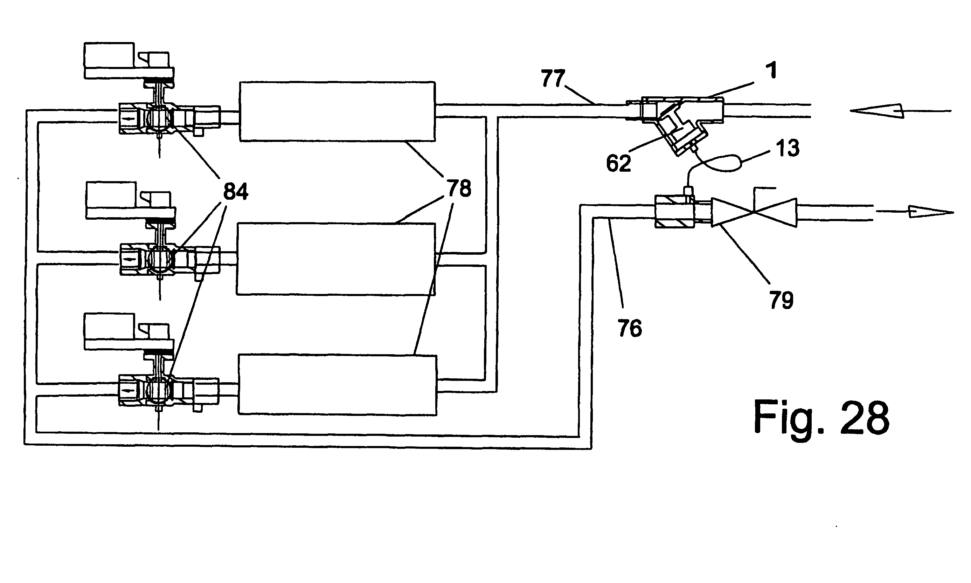

Fig. 28 shows the APCV of Fig. 23 used as an ADPCV 1 and 62 applied to control the differential pressure between a supply 77 to and return 76 from a group of heat transfer devices 78.

Regular control valves 84 are used. Because the differential pressure between the supply and return is controlled, the pressure variations across the control valves 84 are limited to the pressure drop across the heat transfer devices 78.

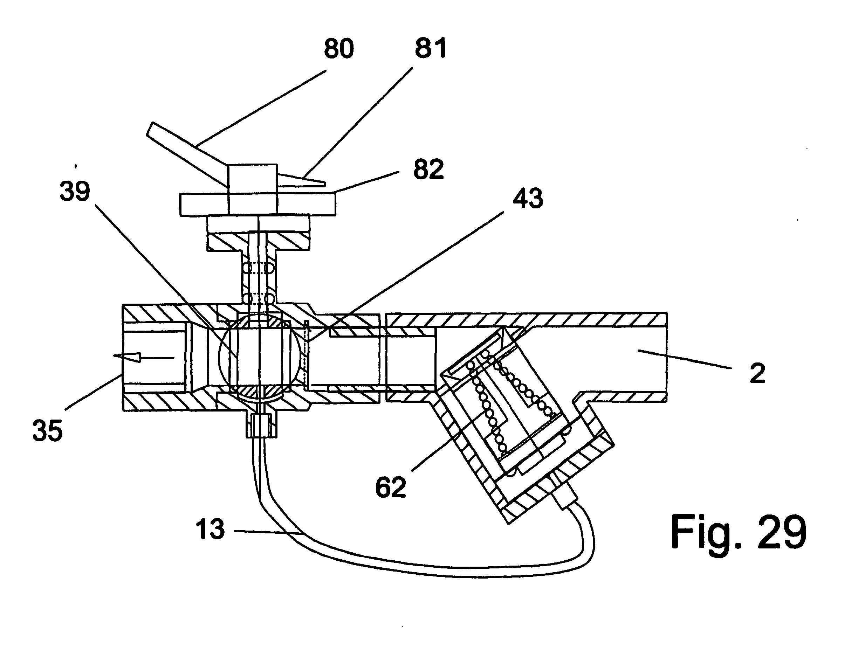

Fig. 29 is a PICV of the same type as Fig. 26, except that it is manually adjusted with a handle 80. The position of the handle 80 is indicated by a pointer 81 and a graduated disk 82.

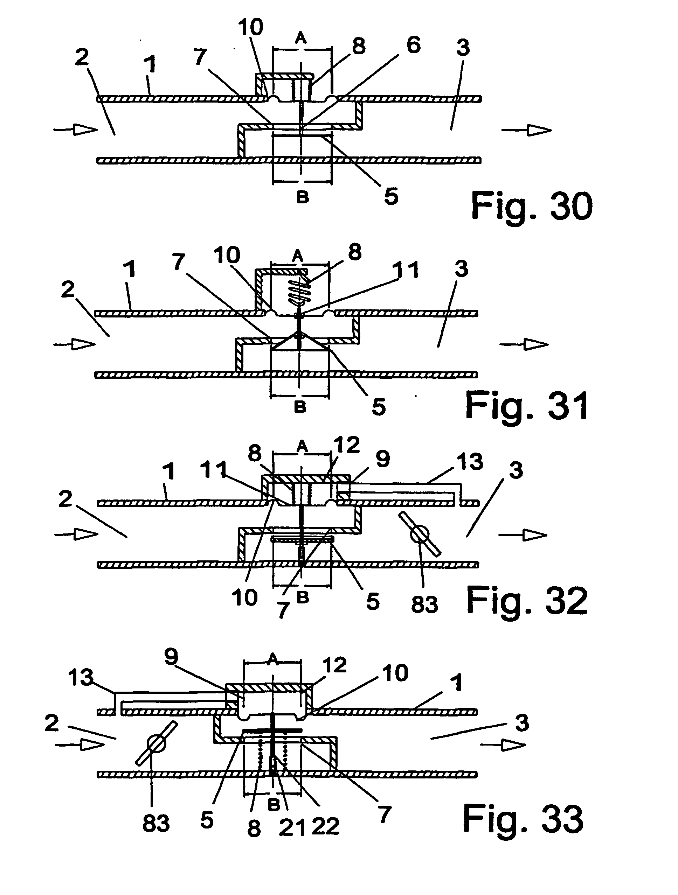

Fig. 30 shows the APCV applied to control the pressure in air handling systems. The outlet 3 pressure is controlled. A compression spring 8 is used. It pushes down and its force adds to the weight of the diaphragm 10, stem 6 and the control disk 5. The pressure at the outlet is equal to the combined weight and spring force divided by the area of the control disk 5. The spring 8 can be eliminated to control at a lower pressure.

Fig. 31 shows the APCV applied to control the pressure in air handling systems. The outlet 3 pressure is controlled. The control disk 5 is shaped as a cone. An extension spring 8 is used. It pulls up with a force that is less than the weight of the control disk, diaphragm and stem. This weight minus the spring force divided by the area of the of the control disk is equal to the outlet pressure, which can be adjusted to very low values.

Fig. 32 shows the APCV of Fig. 30 applied as an ADPCV controlling the differential pressure across an air damper 83 which is located downstream. Thereby, the air flow is independent of upstream and downstream pressure vanations in the duct work. It is a PICV for air flow.

Fig. 33 is similar to Fig. 32 except that the air damper 83 is located upstream of the ADPCV. It is of the type that has the control disk 5 above the seat 7.

The following pertains to fig. 1, 2, 6-10, 12-18, 20-32.

The spring tension determines the differential pressure across the control valve, which in turn determines the maximum flow rate. By providing means to adjust the spring rate, the maximum flow can be set. This means that a well defined relationship between the degree of opening of the valve and the flow rate can be adjusted.

The following pertains to PICV with actuator.

A valve operated by a proportional actuator has a well defined relationship between the control signal and the degree of opening of the control valve. Therefore there will be a well defined relationship between proportional control signal (for example; 2 - 10VDC or 4 - 20 mA) and the flow rate.

When a microprocessor based control system is used, a correction table can be applied to the control signal to convert it to a flow estimation. In a central processor the flow estimates from all the valves can be presented in conjunction with graphics showing the flow distribution in a hydronic system.

If the control signal is so called "three point floating" the control signal can not directly be used. Instead, the actuators can be provided with feedback potentiometers, which provides a feedback signal to the microprocessor based control system. The feedback signal uses the above described table and is recalculated to a flow estimate.

The maximum flow rate can also be adjusted by limiting the opening of the pressure independent control valve. One way of doing this is to limit the control signal to the actuator. An other way is to use adjustable end stop, so the ball valve does not open fully. However, in this case a feedback potentiometer should be used if information about the flow rate is desired.

The following pertains to all of the present invention.

While particular embodiments of the present invention have been described in some detail above, changes and modifications may be made in the illustrated and described embodiments without departing from the scope of the invention. It is therefore intended that the following claims cover all equivalent modifications and variations as fully within the scope of the invention as defined by the claims.

**Claims**

1.  An automatic pressure regulating valve providing a substantially constant outlet pressure regardless of changes in the inlet pressure, comprising:

    a valve body (1) having connections for a single phase fluid line and a flow passage between the inlet (2) connection and the outlet (3) connection of said fluid line;
    an opening having a defined seat orifice intersecting said flow passage;

    a moveable assembly, comprising a disk (5) or cup connected to a pressure sensing member comprising a diaphragm (10) and being positioned upstream of the seat (7),
    the disk (5) or cup and the pressure sensing member having essentially the same effective surface area;
    the pressure sensing member operates inside a cylinder or chamber and divides it in two portions, one portion communicates with the inlet (2), the other portion communicates with a reference pressure;
    the disk (5) or cup is located downstream of the seat orifice with which it interacts to vary the flow resistance by moving between a closed and a fully open position;
    the moveable assembly, is biased by a force, and is free to automatically move to any intermediate position between fully open and closed, producing a desired outlet pressure which minus the reference pressure, times the effective surface area of the disk (5) or cup generates an opposing force equal to the biasing force.

2.  An automatic pressure regulating valve providing a substantially constant inlet pressure regardless of changes in the outlet pressure, comprising:

    a valve body (1) having connections for a single phase fluid line and a flow passage between the inlet (2) connection and the outlet (3) connection of said fluid line;
    an opening having a defined seat orifice intersecting said flow passage;
    a moveable assembly, comprising a disk (5) or cup connected to a pressure sensing member comprising a diaphragm (10) and being positioned downstream of the seat (7);
    the disk (5) or cup and the pressure sensing member having essentially the same effective surface area;
    the pressure sensing member operates inside a cylinder or chamber and divides it in two portions, one portion communicates with the outlet (3), the other portion communicates with a reference pressure;
    the disk (5) or cup is located downstream of the seat orifice with which it interacts to vary the flow resistance by moving between a closed and a fully open position;
    the moveable assembly, is biased by a force, and is free to automatically move to any intermediate position between fully open and closed, producing a desired inlet pressure which minus the reference pressure, times the effective surface area of the disk (5) or cup produces an opposing force equal to the biasing force.

3.  An automatic pressure regulating valve according to claims 1 or 2, having spring means biasing said moveable assembly.

4.  An automatic pressure regulating valve according to claims 1 or 2, having a variable pressure biasing said moveable assembly.

5.  An automatic pressure regulating valve according to claims 1 or 2, having a proportional electromagnetic means biasing said moveable assembly.

6.  An automatic pressure regulating valve according to claims 1 or 2, having magnetic means biasing said moveable assembly.

7.  An automatic pressure regulating valve according to claims 1 or 2, having a column of liquid biasing said moveable assembly.

8.  An automatic pressure regulating valve according to claims 1 or 2, having a weight biasing said moveable assembly.

9.  An automatic pressure regulating valve according to claims 1 or 2, using the weight of the above mentioned moveable parts biasing said moveable assembly.

10. An automatic pressure regulating valve according to claims 1 or 2, having any combination or combinations of above mentioned biasing means.

11. An automatic pressure regulating valve according to claim 10 having a valve body with a recess intersecting the flow passage, having a detachable unit comprising at least, a seat orifice and a moveable assembly.

12. An automatic pressure regulating valve according to claims 10 and 11, having an orifice seat against which a moveable disk or cup operates and can make contact along a thin line where the essential surface of the orifice seat and a surface of the moveable disk or cup meet at different angles.

13. An automatic pressure regulating valve according to claims 10 and 11, having an orifice seat against which a disk or cup operates and can make contact along a thin line where the surface of the orifice seat and a surface of the disk or cup can meet and one of the surfaces has a pointed edge.

14. A pressure independent fluid flow regulating valve providing a substantially constant flow rate regardless of changes in line fluid pressure, comprising:

a valve body (1) having an inlet (2) and an outlet (3), forming a flow passage through said valve body;

an adjustable throttle means (36) disposed in said fluid passage to vary the cross-sectional area of said fluid passage;

downstream of said throttling device (36) a seat orifice intersecting said flow passage;

a moveable assembly, comprising a disk (5) or cup connected to, and operated by a pressure sensing means member comprising a diaphragm (10);

the disk (5) or cup is located downstream of the seat (7) with which it interacts to vary the flow resistance;

the effective surface area of the disk (5) or cup, is essentially the same as the effective surface area of said pressure sensing means;

the pressure sensing means operates inside a cylinder or chamber which it divides in two portions, one portion is connected to the outlet (3), the other portion via a reference pressure passage (13) connected to a point upstream of the throttle means (36);

wherein the moveable assembly is biased by a spring means (8) and is free to automatically move to any intermediate position between fully open and closed, producing a desired outlet pressure which minus the reference pressure, times the effective surface area of the disk (5) or cup generates an opposing force equal to the spring biasing force.

15. A pressure independent fluid flow regulating valve providing a substantially constant flow rate regardless of changes in line fluid pressure, comprising:

a valve body (1) having an inlet (2) and an outlet (3), forming a flow passage through said valve body;

an adjustable throttle means (36) disposed in said fluid passage to vary the cross-sectional area of said fluid passage;

upstream of said throttling device (36) a seat orifice intersecting said flow passage;

a moveable assembly, comprising a disk (5) or cup connected to, and operated by a pressure sensing means;

the disk (5) or cup is located downstream of the seat (7) with which it interacts to vary the flow resistance;

the effective surface area of the cup or disk (5), is essentially the same as the effective surface area of said pressure sensing means;

the pressure sensing means operates inside a cylinder or chamber which it divides in two portions, one portion is connected to the inlet (2), the other portion via a reference pressure passage (13) connected to a point downstream of the throttle means (36);

wherein the moveable assembly is biased by spring means (8) and is free to automatically move to any intermediate position between fully open and closed, producing a desired inlet pressure which minus the reference pressure, times the effective surface area of the disk (5) or cup produces an opposing force equal to the spring biasing force.

16. A pressure independent fluid flow regulating valve according to claim 14 or 15 having a valve body with a recess intersecting the flow passage;
a detachable unit comprising at least, a seat orifice and a moveable assembly.

17. A pressure independent fluid flow regulating valve according to claim 14 or 15 using a globe valve as adjustable throttle means.

18. A pressure independent fluid flow regulating valve according to claim 17 using a globe valve as adjustable throttle means and between its plug and the disk or cup of the moveable assembly a spring is disposed, which changes the spring bias of the moveable assembly with respect to the position of said plug.

19. A pressure independent fluid flow regulating valve according to claim 14 or 15 using a ball valve as adjustable throttle means;

20. A pressure independent fluid flow regulating valve according to claim 19 with a ball having a bore with its length axis at an angle different from perpendicular to its axis of rotation.

21. A pressure independent fluid flow regulating valve according to claim 19 with the pressure inside the bore of the ball communicated to the pressure sensing member of the moveable assembly.

22. A pressure independent fluid flow regulating valve according to claim 19 or 20 having a characterizing disk in the bore of the ball or in the seat area.

23. A pressure independent fluid flow regulating valve according to claim 19 with a one piece body using a top entry ball.

24. A pressure independent fluid flow regulating valve according to claim 19 with a ball having a at least one characterizing disk in the bore of the ball and or in the seat area.

25. A pressure independent fluid flow regulating valve according to claim. 19 where the ball or seat has a specially shaped opening for the fluid flow.

26. A pressure independent fluid flow regulating valve according to claims 14 and 15 where said spring has means to adjust the spring tension.

27. A pressure independent fluid flow regulating valve according to claim 26 where said spring has means to externally adjust the spring tension.

28. A pressure independent fluid flow regulating valve according to claim 14 and 15, said shaft is fitted with a handle for manual adjustment.

29. A pressure independent fluid flow regulating valve according to claims 14 and 15 provided with an actuator to operate said shaft in response to control signals.

30. A pressure independent fluid flow regulating valve according to claims 28 and 29, fitted with a pointer and scale graduated in units of flow rate.

31. A pressure independent fluid flow regulating valve according to claims 14 and 15 provided with adjustable means to limit the movement of stem.

32. A pressure independent fluid flow regulating valve according to claims 14 and 15, provided with an actuator to operate said shaft, and said actuator has adjustable means to limit the movement of the stem.

**Patentansprüche**

1. Automatisches Druckregelventil zum Bereitstellen eines im wesentlichen konstanten Auslaßdrucks unabhängig von Einlaßdruckänderungen, mit:

einem Ventilkörper (1) mit Verbindungen für eine Einphasenfluidleitung und einem Strömungskanal zwischen der Einlaßverbindung (2) und der Auslaßverbindung (3) der Fluidleitung;
eine quer zum Strömungskanal angeordneten Öffnung mit einer definierten Sitzmündung;
einer beweglichen Anordnung, die eine Scheibe oder Schale (5) aufweist, die mit einem Druckerfassungselement verbunden ist, das eine Membran (10) aufweist und stromaufwärts von dem Sitz (7) angeordnet ist;

wobei die Scheibe oder Schale (5) und das Druckerfassungselement im wesentlichen die gleiche effektive Oberfläche aufweisen;

wobei das Druckerfassungselement im Inneren eines Zylinders oder einer Kammer arbeitet und ihn bzw. sie in zwei Abschnitte teilt, wobei ein Abschnitt mit dem Einlaß (2) und der andere Abschnitt mit einem Referenzdruck kommuniziert;

wobei die Scheibe oder Schale (5) stromabwärts von der Sitzmündung angeordnet ist, mit der sie wechselwirkt, um den Strömungswiderstand durch Bewegen zwischen einer geschlossenen und einer vollständig geöffneten Position zu ändern;

wobei die bewegliche Anordnung durch eine Kraft vorgespannt ist und sich automatisch zu irgendeiner Zwischenposition zwischen der vollständig geöffneten und der geschlossenen Position bewegen kann, um einen gewünschten Auslaßdruck zu erzeugen, der abzüglich des Referenzdrucks, multipliziert mit der effektiven Oberfläche der Scheibe oder Schale (5) eine der Vorspannkraft gleiche Gegenkraft erzeugt.

2. Automatisches Druckregelventil zum Bereitstellen eines im wesentlichen konstanten Einlaßdrucks unabhängig von Auslaßdruckänderungen, mit:

einem Ventilkörper (1) mit Verbindungen für eine Einphasenfluidleitung und einem Strömungskanal zwischen der Einlaßverbindung (2) und der Auslaßverbindung (3) der Fluidleitung;
einer quer zum Strömungskanal angeordneten Öffnung mit einer Sitzmündung;
einer beweglichen Anordnung, die eine Scheibe oder Schale (5) aufweist, die mit einem Druckerfassungselement verbunden ist, das eine Membran (10) aufweist und stromabwärts von der Sitzmündung (7) angeordnet ist;

wobei die Scheibe oder Schale (5) und das Druckerfassungselement im wesentlichen die gleiche effektive Oberfläche aufweisen;

wobei das Druckerfassungselement im Inneren eines Zylinders oder einer Kammer arbeitet und ihn bzw. sie in zwei Abschnitte teilt, wobei ein Abschnitt mit dem Auslaß (3) und der andere Abschnitt mit einem Referenzdruck kommuniziert;

wobei die Scheibe oder Schale (5) stromabwärts von der Sitzfläche angeordnet ist, mit der sie wechselwirkt, um den Strömungswiderstand durch Bewegen zwischen einer geschlossenen und einer vollständig geöffneten Position zu ändern;

wobei die bewegliche Anordnung durch eine Kraft vorgespannt ist und sich automatisch zu einer Zwischenposition zwischen der vollständig geöffneten und der geschlossenen Position bewegen kann, um einen gewünschten Einlaßdruck zu erzeugen, der abzüglich des Referenzdrucks, multipliziert mit der effektiven Oberfläche der Scheibe oder Schale (5) eine der Vorspannkraft gleiche Gegenkraft erzeugt.

3. Automatisches Regelventil nach Anspruch 1 oder 2, mit einer Federeinrichtung zum Vorspannen der beweglichen Anordnung.

4. Automatisches Regelventil nach Anspruch 1 oder 2, mit einem variablen Druck zum Vorspannen der beweglichen Anordnung.

5. Automatisches Regelventil nach Anspruch 1 oder 2, mit einer proportionalen elektromagnetischen Einrichtung zum Vorspannen der beweglichen Anordnung.

6. Automatisches Regelventil nach Anspruch 1 oder 2, mit einer magnetischen Einrichtung zum Vorspannen der beweglichen Anordnung.

7. Automatisches Regelventil nach Anspruch 1 oder 2, mit einer Flüssigkeitssäule zum Vorspannen der beweglichen Anordnung.

8. Automatisches Regelventil nach Anspruch 1 oder 2, mit einem Gewicht zum Vorspannen der beweglichen Anordnung.

9. Automatisches Regelventil nach Anspruch 1 oder 2, wobei das Gewicht der vorstehend erwähnten beweglichen Komponenten die bewegliche Anordnung vorspannt.

10. Automatisches Regelventil nach Anspruch 1 oder 2, mit einer beliebigen Kombination oder beliebigen Kombinationen der vorstehend erwähnten Vorspanneinrichtungen.

11. Automatisches Regelventil nach Anspruch 10, mit einem Ventilkörper, der eine den Strömungskanal kreuzende Vertiefung aufweist, und mit einer abnehmbaren Einheit, die mindestens eine Sitzmündung und eine bewegliche Anordnung aufweist.

12. Automatisches Regelventil nach Anspruch 10 oder 11, mit einem Mündungssitz, gegen den eine bewegliche Scheibe oder Schale wirkt und entlang einer dünnen Linie, wo eine Hauptfläche des Mündungssitzes und eine Oberfläche der beweglichen Scheibe oder Schale unter verschiedenen Winkeln aufeinandertreffen, in Kontakt kommen kann.

**13.** Automatisches Regelventil nach Anspruch 10 oder 11, mit einem Mündungssitz, gegen den eine Scheibe oder Schale wirkt und entlang einer dünnen Linie, wo die Oberfläche des Mündungssitzes und eine Oberfläche der Scheibe oder Schale aufeinander treffen können, in Kontakt kommen kann, wobei eine der Oberflächen einen zugespitzten Rand aufweist.

**14.** Druckunabhängiges Fluiddurchflußregelventil zum Bereitstellen einer im wesentlichen konstanten Durchflußrate unabhängig von Änderungen eines Fluidleitungsdrucks, mit:

einem Ventilkörper (1) mit einem Einlaß (2) und einem Auslaß (3), die einen Strömungskanal durch den Ventilkörper bilden;
einer im Strömungskanal angeordneten regelbaren Drosseleinrichtung (36) zum Ändern der Querschnittsfläche des Strömungskanals;
einer stromabwärts von der Drosseleinrichtung (36) quer zum Strömungskanal angeordneten Sitzmündung;
einer beweglichen Anordnung mit einer Scheibe oder Schale (5), die mit einer Druckerfassungseinrichtung mit einer Membran (10) verbunden ist und durch diese betätigt wird;

wobei die Scheibe oder Schale (5) stromabwärts von dem Sitz (7) angeordnet ist, mit dem sie wechselwirkt, um den Strömungswiderstand zu ändern;
wobei die effektive Oberfläche der Scheibe oder Schale (5) der effektiven Oberfläche der Druckerfassungseinrichtung im wesentlichen gleicht;
wobei die Druckerfassungseinrichtung im Inneren eines Zylinders oder einer Kammer arbeitet, den bzw. die sie in zwei Abschnitte teilt, wobei ein Abschnitt mit dem Auslaß (3) und der andere Abschnitt über einen Referenzdruckkanal (13) mit einer Stelle stromaufwärts von der Drosseleinrichtung (36) verbunden ist;
wobei die bewegliche Anordnung durch eine Federeinrichtung (8) vorgespannt ist und sich automatisch zu irgendeiner beliebigen Zwischenposition zwischen einer vollständig geöffneten und einer geschlossenen Position bewegen kann, um einen gewünschten Auslaßdruck zu erzeugen, der abzüglich des Referenzdrucks, multipliziert mit der effektiven Oberfläche der Scheibe oder Schale (5), eine der Federvorspannkraft gleiche Gegenkraft erzeugt.

**15.** Druckunabhängiges Fluiddurchflußregelventil zum Bereitstellen einer im wesentlichen konstanten Durchflußrate unabhängig von Änderungen eines Fluidleitungsdrucks, mit:

einem Ventilkörper (1) mit einem Einlaß (2) und einem Auslaß (3), die einen Strömungskanal durch den Ventilkörper bilden;
einer im Strömungskanal angeordneten regelbaren Drosseleinrichtung (36) zum Ändern der Querschnittsfläche des Strömungskanals;
einer stromaufwärts von der Drosseleinrichtung (36) quer zum Strömungskanal angeordneten Sitzmündung;
einer beweglichen Anordnung mit einer Scheibe oder Schale (5), die mit einer Druckerfassungseinrichtung verbunden ist und durch diese betätigt wird;

wobei die Scheibe oder Schale (5) stromabwärts von dem Sitz (7) angeordnet ist, mit dem sie wechselwirkt, um den Strömungswiderstand zu ändern;
wobei die effektive Oberfläche der Scheibe oder Schale (5) der effektiven Oberfläche der Druckerfassungseinrichtung im wesentlichen gleicht;
wobei die Druckerfassungseinrichtung im Inneren eines Zylinders oder einer Kammer arbeitet, den bzw. die sie in zwei Abschnitte teilt, wobei ein Abschnitt mit dem Einlaß (2) und der andere Abschnitt über einen Referenzdruckkanal (13) mit einer Stelle stromabwärts von der Drosseleinrichtung (36) verbunden ist;
wobei die bewegliche Anordnung durch eine Federeinrichtung (8) vorgespannt ist und sich automatisch zu irgendeiner Zwischenposition zwischen einer vollständig offenen und einer geschlossenen Position bewegen kann, um einen gewünschten Einlaßdruck zu erzeugen, der abzüglich des Referenzdrucks, multipliziert mit der effektiven Oberfläche der Scheibe oder Schale (5), eine der Federvorspannkraft gleiche Gegenkraft erzeugt.

**16.** Druckunabhängiges Fluiddurchflußregelventil nach Anspruch 14 oder 15, mit einem Ventilkörper, der eine den Strömungskanal kreuzende Vertiefung aufweist, und mit einer abnehmbaren Einheit, die mindestens eine Sitzflächenöffnung und eine bewegliche Anordnung aufweist.

**17.** Druckunabhängiges Fluiddurchflußregelventil nach Anspruch 14 oder 15, wobei als regelbare Drosseleinrichtung ein Tellerventil verwendet wird.

**18.** Druckunabhängiges Fluiddurchflußregelventil nach Anspruch 17, wobei als regelbare Drosseleinrichtung ein Tellerventil verwendet wird, und wobei zwischen seinem Ventilstopfen und der Scheibe oder Schale der beweglichen Anordnung eine Feder angeordnet ist, welche die Federspannung der beweglichen Anordnung bezüglich der Position des Ventilstopfens ändert.

**19.** Druckunabhängiges Fluiddurchflußregelventil nach Anspruch 14 oder 15, wobei als regelbare Drosseleinrichtung ein Kugelventil verwendet wird.

**20.** Druckunabhängiges Fluiddurchflußregelventil nach Anspruch 19, mit einer Kugel mit einer Bohrung, deren Längsachse sich unter einem Winkel erstreckt, der von einer Senkrechten zu ihrer Drehachse verschieden ist.

**21.** Druckunabhängiges Fluiddurchflußregelventil nach Anspruch 19, wobei der Druck im Inneren der Bohrung der Kugel mit der Druckerfassungseinrichtung der beweglichen Anordnung kommuniziert.

**22.** Druckunabhängiges Fluiddurchflußregelventil nach Anspruch 19 oder 20, mit einer charakterisierenden Scheibe in der Bohrung der Kugel oder in der Sitzfläche.

**23.** Druckunabhängiges Fluiddurchflußregelventil nach Anspruch 19, mit einem einstückigen Körper, in dem eine von oben eingeführte Kugel verwendet wird.

**24.** Druckunabhängiges Fluiddurchflußregelventil nach Anspruch 19, mit einer Kugel mit mindestens einer charakterisierenden Scheibe in der Bohrung der Kugel und/oder in der Sitzfläche.

**25.** Druckunabhängiges Fluiddurchflußregelventil nach Anspruch 19, wobei die Kugel oder der Sitz eine besonders geformte Öffnung für die Fluidströmung aufweist.

**26.** Druckunabhängiges Fluiddurchflußregelventil nach Anspruch 14 oder 15, wobei die Feder eine Einrichtung zum Einstellen der Federspannung aufweist.

**27.** Druckunabhängiges Fluiddurchflußregelventil nach Anspruch 26, wobei die Feder eine Einrichtung zum externen Einstellen der Federspannung aufweist.

**28.** Druckunabhängiges Fluiddurchflußregelventil nach Anspruch 14 oder 15, wobei ein Griff für eine manuelle Einstellung an dem Schaft befestigt ist.

**29.** Druckunabhängiges Fluiddurchflußregelventil nach Anspruch 14 oder 15, mit einem Stellglied zum Betätigen des Schafts in Antwort auf Steuersignale.

**30.** Druckunabhängiges Fluiddurchflußregelventil nach Anspruch 28 oder 29, mit einem Zeiger und einer in Einheiten der Durchflußrate eingeteilten Skala.

**31.** Druckunabhängiges Fluiddurchflußregelventil nach Anspruch 14 oder 15, mit einer Einstelleinrichtung zum Begrenzen der Bewegung des Stamms.

**32.** Druckunabhängiges Fluiddurchflußregelventil nach Anspruch 14 oder 15, mit einem Stellglied zum Betätigen des Schafts, wobei das Stellglied eine Einstelleinrichtung zum Begrenzen der Bewegung des Schaft aufweist.

**Revendications**

**1.** Soupape de régulation de pression automatique fournissant une pression de sortie sensiblement constante indépendamment des variations de la pression d'entrée, comprenant :

un corps de soupape (1) ayant des raccordements à un tuyau de fluide en phase unique et un conduit d'écoulement entre le raccordement d'entrée (2) et le raccordement de sortie (3) audit tuyau du fluide ;
une ouverture ayant un orifice de siège défini coupant ledit conduit d'écoulement ;
un ensemble mobile, comprenant un disque ou cuvette (5) relié à un élément capteur de pression qui comprend un diaphragme (10) et est placé en amont du siège (7) ;
le disque ou cuvette (5) et l'élément capteur de pression ayant sensiblement la même superficie efficace ;
l'élément capteur de pression fonctionnant à l'intérieur d'un cylindre ou chambre qu'il divise en deux parties, une partie communiquant avec l'entrée (2), l'autre partie étant en contact avec une pression de référence ;
le disque ou cuvette (5) étant situé en aval de l'orifice de siège avec lequel il interagit pour faire varier la résistance fluidique en se déplaçant entre une position fermée et une position grande ouverte ;
l'ensemble mobile étant soumis à une force et étant libre de se déplacer automatiquement en n'importe quelle position intermédiaire entre grand ouvert et fermé, produisant la pression de sortie souhaitée qui moins la pression de référence multipliée par la superficie efficace du disque ou cuvette (5) engendre une force de réaction égale à la force d'application.

**2.** Soupape de régulation de pression automatique fournissant une pression d'entrée sensiblement constante indépendamment des variations de la pression de sortie, comprenant :

un corps de soupape (1) ayant des raccordements à un tuyau de fluide en phase unique et un conduit d'écoulement entre le raccordement d'entrée (2) et le raccordement de sortie (3) audit tuyau du fluide ;

une ouverture ayant un orifice de siège défini coupant ledit conduit d'écoulement ;

un ensemble mobile, comprenant un disque ou cuvette (5) relié à un élément capteur de pression qui comprend un diaphragme (10) et est placé en aval du siège (7) ;

le disque ou cuvette (5) et l'élément capteur de pression ayant sensiblement la même superficie efficace ;

l'élément capteur de pression fonctionnant à l'intérieur d'un cylindre ou chambre qu'il divise en deux parties, une partie communiquant avec la sortie (3), l'autre partie étant en contact avec une pression de référence ;

le disque ou cuvette (5) étant situé en aval de l'orifice de siège avec lequel il interagit pour faire varier la résistance fluidique en se déplaçant entre une position fermée et une position grande ouverte ;

l'ensemble mobile étant soumis à une force et étant libre de se déplacer automatiquement en n'importe quelle position intermédiaire entre grand ouvert et fermé, produisant la pression d'entrée souhaitée qui moins la pression de référence multipliée par la superficie efficace du disque ou cuvette (5) produit une force de réaction égale à la force d'application.

3. Soupape de régulation de pression automatique selon la revendication 1 ou 2, comportant des moyens du type ressort pour influencer ledit ensemble mobile.

4. Soupape de régulation de pression automatique selon la revendication 1 ou 2, comportant une pression variable pour influencer ledit ensemble mobile.

5. Soupape de régulation de pression automatique selon la revendication 1 ou 2, comportant des moyens électromagnétiques proportionnels pour influencer ledit ensemble mobile.

6. Soupape de régulation de pression automatique selon la revendication 1 ou 2, comportant des moyens magnétiques pour influencer ledit ensemble mobile.

7. Soupape de régulation de pression automatique selon la revendication 1 ou 2, comportant une colonne de liquide pour influencer ledit ensemble mobile.

8. Soupape de régulation de pression automatique selon la revendication 1 ou 2, comportant un poids pour influencer ledit ensemble mobile.

9. Soupape de régulation de pression automatique selon la revendication 1 ou 2, comportant le poids des pièces mobiles susmentionnées pour influencer ledit ensemble mobile.

10. Soupape de régulation de pression automatique selon la revendication 1 ou 2, comportant une ou plusieurs combinaisons quelconques des moyens d'actions susmentionnés.

11. Soupape de régulation de pression automatique selon la revendication 10, ayant un corps de soupape avec un renfoncement coupant ledit conduit d'écoulement et ayant une unité amovible qui comprend au moins un orifice de siège et un ensemble mobile.

12. Soupape de régulation de pression automatique selon les revendications 10 et 11, ayant un orifice de siège contre lequel un disque ou cuvette mobile fonctionne en établissant un contact le long d'une ligne fine où l'essentiel de la surface de l'orifice de siège et une partie de la surface du disque ou cuvette mobile se rejoignent sous des angles différents.

13. Soupape de régulation de pression automatique selon les revendications 10 et 11, ayant un orifice de siège contre lequel un disque ou cuvette fonctionne en établissant un contact le long d'une ligne fine où la surface de l'orifice de siège et une partie de la surface du disque ou cuvette peuvent se rejoindre, l'une des surfaces ayant un bord pointu.

14. Soupape de régulation d'écoulement de fluide indépendant de la pression fournissant un débit sensiblement constant indépendamment des variations de la pression du fluide du tuyau, comprenant :

un corps de soupape (1) ayant une entrée (2) et une sortie (3) formant un conduit d'écoulement à travers ledit corps de soupape ;

des moyens de type papillon réglables (36) disposés dans ledit conduit d'écoulement pour faire varier l'aire de section transversale dudit conduit d'écoulement ;

en aval dudit dispositif d'étranglement (36), un orifice de siège coupant ledit conduit d'écoulement ;

un ensemble mobile, comprenant un disque ou cuvette (5) relié à et fonctionnant sous l'effet d'un élément capteur de pression qui comprend un diaphragme (10) ;

le disque ou cuvette (5) étant situé en aval de l'orifice de siège avec lequel il interagit pour faire varier la résistance fluidique ;

la superficie efficace du disque ou cuvette (5) étant sensiblement la même que la superficie efficace desdits moyens capteurs de pression ; les moyens capteurs de pression fonctionnant à l'intérieur d'un cylindre ou chambre qu'ils divisent en deux parties, une partie raccordée à la sortie (3), l'autre partie étant raccordée à un point en amont des moyens d'étranglement (36) via un conduit de pression de référence (13) ;

dans laquelle l'ensemble mobile subit l'effet de moyens de type ressort (8) et est libre de se déplacer automatiquement en n'importe quelle position intermédiaire entre grand ouvert et fermé, produisant la pression de sortie souhaitée qui moins la pression de référence multipliée par la superficie efficace du disque ou cuvette (5) engendre une force de réaction égale à la force d'action du ressort.

15. Soupape de régulation d'écoulement de fluide indépendant de la pression fournissant un débit sensiblement constant indépendamment des variations de la pression du fluide du tuyau, comprenant :

un corps de soupape (1) ayant une entrée (2) et une sortie (3) formant un conduit d'écoulement à travers ledit corps de soupape ; des moyens de type papillon réglables (36) disposés dans ledit conduit d'écoulement pour faire varier l'aire de section transversale dudit conduit d'écoulement ; en amont dudit dispositif d'étranglement (36), un orifice de siège coupant ledit conduit d'écoulement ; un ensemble mobile, comprenant un disque ou cuvette (5) relié à et fonctionnant sous l'effet de moyens capteurs de pression ; le disque ou cuvette (5) étant situé en aval du siège (7) avec lequel il interagit pour faire varier la résistance fluidique ; la superficie efficace de la cuvette ou disque (5) étant essentiellement la même que la superficie efficace desdits moyens capteurs de pression ; les moyens capteurs de pression fonctionnant à l'intérieur d'un cylindre ou chambre qu'ils divisent en deux parties, une partie raccordée à l'entrée (2), l'autre partie étant raccordée à un point en aval des moyens d'étranglement (36) via un conduit de pression de référence (13) ;

dans laquelle l'ensemble mobile subit l'effet de moyens de type ressort (8) et est libre de se déplacer automatiquement en n'importe quelle position intermédiaire entre grand ouvert et fermé, produisant la pression d'entrée souhaitée qui moins la pression de référence multipliée par la superficie efficace du disque ou cuvette (5) produit une force de réaction égale à la force d'action du ressort.

16. Soupape de régulation d'écoulement de fluide indépendant de la pression selon la revendication 14 ou 15, ayant un corps de soupape avec un renfoncement coupant le conduit d'écoulement et ayant une unité amovible qui comprend au moins un orifice de siège et un ensemble mobile.

17. Soupape de régulation d'écoulement de fluide indépendant de la pression selon la revendication 14 ou 15, comportant un robinet à soupape comme moyen d'étranglement réglable.

18. Soupape de régulation d'écoulement de fluide indépendant de la pression selon la revendication 17, comportant un robinet à soupape comme moyen d'étranglement réglable et dans laquelle est disposé, entre son culot et le disque ou cuvette de l'ensemble mobile, un ressort qui modifie l'influence du ressort sur l'ensemble mobile en ce qui concerne la position dudit culot.

19. Soupape de régulation d'écoulement de fluide indépendant de la pression selon la revendication 14 ou 15, comportant un robinet à tournant sphérique comme moyen d'étranglement réglable.

20. Soupape de régulation d'écoulement de fluide indépendant de la pression selon la revendication 19, dans laquelle la bille a un alésage dont l'axe longitudinal forme avec son axe de rotation un angle différent de 90°.

21. Soupape de régulation d'écoulement de fluide indépendant de la pression selon la revendication 19, dans laquelle la pression à l'intérieur de l'alésage de la bille est communiquée à l'élément capteur de pression de l'ensemble mobile.

22. Soupape de régulation d'écoulement de fluide indépendant de la pression selon la revendication 19 ou 20, ayant un disque de caractérisation dans l'alésage de la bille ou dans la surface du siège.

23. Soupape de régulation d'écoulement de fluide indépendant de la pression selon la revendication 19, ayant un corps monobloc utilisant une bille d'entrée supérieure.

24. Soupape de régulation d'écoulement de fluide indépendant de la pression selon la revendication 19, ayant une bille qui a au moins un disque de caractérisation dans l'alésage de la bille et/ou dans la surface du siège.

25. Soupape de régulation d'écoulement de fluide indépendant de la pression selon la revendication 19, dans laquelle la bille ou le siège a une ouverture de forme spéciale pour l'écoulement du fluide.

**26.** Soupape de régulation d'écoulement de fluide indépendant de la pression selon les revendications 14 et 15, dans laquelle ledit ressort a des moyens de réglage de la tension du ressort.

**27.** Soupape de régulation d'écoulement de fluide indépendant de la pression selon la revendication 26, dans laquelle ledit ressort a des moyens de réglage extérieurs de la tension du ressort.

**28.** Soupape de régulation d'écoulement de fluide indépendant de la pression selon les revendications 14 et 15, dans laquelle ledit axe est équipé d'un manche pour un réglage manuel.

**29.** Soupape de régulation d'écoulement de fluide indépendant de la pression selon les revendications 14 et 15, dotée d'un actionneur pour faire marcher ledit axe en réponse à des signaux de commande.

**30.** Soupape de régulation d'écoulement de fluide indépendant de la pression selon les revendications 28 et 29, équipée d'une aiguille et d'une échelle graduée en unités de débit.

**31.** Soupape de régulation d'écoulement de fluide indépendant de la pression selon les revendications 14 et 15, dotée de moyens réglables pour limiter le mouvement de sa tige.

**32.** Soupape de régulation d'écoulement de fluide indépendant de la pression selon les revendications 14 et 15, dotée d'un actionneur pour faire marcher ledit axe, ledit actionneur ayant des moyens réglables pour limiter le mouvement de la tige.

Fig. 2

Fig. 1

Fig. 3

Fig. 4

Fig. 5

EP 1 269 280 B1

Fig. 7

Fig. 6

Fig. 9

Fig. 8

# Fig. 10

# Fig. 11

Fig. 12

Fig. 13

EP 1 269 280 B1

Fig. 14

EP 1 269 280 B1

Fig. 15

Fig. 16

EP 1 269 280 B1

EP 1 269 280 B1

Fig. 17

Fig. 18

Alternative B.

Alternative A.

51

39

48

50

49

44

39

44

Fig. 19

Fig. 20

# Fig. 21

Fig. 22

Fig. 23

Fig. 24

Fig. 25

EP 1 269 280 B1

Fig. 26

Fig. 27

Fig. 28

EP 1 269 280 B1

Fig. 29

80 81

82

39 43

35

62

13

2

EP 1 269 280 B1

**Fig. 30**

**Fig. 31**

**Fig. 32**

**Fig. 33**